# EUROPEAN PATENT APPLICATION

(11) **EP 2 193 938 A1**
(43) Date of publication of application: **09.06.2010**
(21) Application number: 08827429.5
(22) Date of filing: 08.08.2008
(51) Int. Cl.: B60C 11/12, B60C 1/00, B60C 11/00, C08K 3/04, C08K 3/34, C08L 7/00, C08L 9/00

(54) **PNEUMATIC TIRE**

(30) Priority: 10.08.2007 JP 2007209306
(71) Applicant: Bridgestone Corporation, Tokyo 104-8340 (JP)
(72) Inventor: TONOSAKI, Yoichiro, Kodaira-shi Tokyo 187-8531 (JP); MIYOSHI, Masaki, Kodaira-shi Tokyo 187-8531 (JP)
(74) Representative: Whalley, Kevin
(86) International application number: PCT/JP2008/064344
(87) International publication number: WO 2009/022665

(57) **Abstract**

Provided is a pneumatic tire **characterized by** that a tread surface roughness (Ra 75) after running 3000 km on a paved road which is measured based on JIS B0601 is 10 to 100 µ m and that a whole sipe length per 1 cm² of a ground contact area on the above tread surface is 1.0 to 4.0 cm.

## Description

### BACKGROUND OF THE INVENTION

The present invention relates to a pneumatic tire, more specifically to a pneumatic tire for use in a winter season provided with a tread rubber which is inhibited in a reduction of a DRY performance on a dry road surface and maintained in an abrasion resistance and which has an on-ice performance on an ice road surface and a WET performance on a wet road surface.

### RELATED ART

Since spike tires have been prohibited, researches particularly on treads of tires have actively been carried out in order to enhance an on-ice performance on an ice road surface. A water film is liable to be formed on an ice road surface due to frictional heat generated by the ice road surface and the tire, and the water film reduces a friction coefficient between the tire and the ice road surface. This requires treads of tires to be improved in a water film-removing performance, an edge effect and a spike effect in order to enhance an on-ice performance of tires.
In order to provide treads of tires with a water film-removing performance, a large number of micro drainage grooves (sipes) having a depth and a width of each about 100 µm are provided on a surface of a tire brought into contact with a road to remove a water film by the above drainage grooves, whereby a friction coefficient of the tire on an ice road surface is increased. In the above case, however, involved therein is the problem that though an on-ice performance of the tires can be enhanced in the initial stage of use thereof, the on-ice performance is gradually reduced as the tires are abraded. Accordingly, in order to prevent an on-ice performance from being reduced when a tire is abraded, it is considered to form air bubbles in a tread for obtaining an effect of removing a micro water film, and tabular air bubbles produced by an organic fiber resin which serve as a microsipe when appearing on a surface of treads in addition to spherical air bubbles are considered to be formed as the above air bubbles.
Further, it is proposed to increase furthermore a friction coefficient thereof on an ice road surface by adding fine particles to the organic fibers described above to provide the tread with a larger scratching effect (refer to, for example, a patent document 1 and a patent document 2).

Further, a method by which a rigidity in a low temperature region is reduced in order to enhance an on-ice performance is employed, and natural rubber, high cis-polybutadiene and the like which have a glass transition temperature of -60°C or lower are used as a rubber component used for a tread. In particular, high cis-polybutadiene has a low glass transition temperature, and the on-ice performance is enhanced by increasing a proportion of high cis-polybutadiene contained in the rubber component. However, the rigidity in a room temperature region tends to be reduced, and the DRY performance is reduced as the proportion thereof is increased. Enhancing the on-ice performance involves the problem that the tread tends to be reduced in a block rigidity and decreased in a DRY performance and a WET performance (braking and driving performances of the tire on a dry road surface and a rain road surface).
Carbon and silica are mainly used as a filler component used for a tread, and silica is used as a filler which can improve the WET performance described above. However, when silica is mixed with high cis-polybutadiene, involved therein are the problems that the workability is inferior and that it is difficult to elevate a dynamic performance of the composition as is the case with carbon black.

In recent years, a lot of technical developments of modified rubber used for a rubber composition containing silica and carbon black as a filler has been made in order to improve a low hysteresis property (low fuel consumption) and a reinforcing property with a filler. Among them, particularly a method in which a polymerization-active end of a diene base polymer obtained by anionic polymerization using an organic lithium compound is modified with an alkoxysilane derivative interacting with a filler is proposed as an effective method (refer to, for example, a patent document 3).
However, the above methods are applied in many cases to polymers in which a living property of a polymer end can readily be secured, and cis-1,4-polybutadiene which is particularly important to a tread rubber for studless tires is modified therewith and improved in less cases in the above methods. Further, a satisfactory modification effect thereof is not necessarily obtained in rubber compositions prepared by blending silica and carbon black. Particularly in the case of cis-1,4-polybutaediene, the existing situation is that a modification effect thereof is scarcely obtained in carbon black-blended rubbers.
On the other hand, it is tried to obtain a conjugated diene polymer which is subject to silane modification by reacting an alkoxysilane compound with an active end of a conjugated diene polymer having a high cis content which is obtained by using a rare earth element catalyst. According to the above method, an effect of improving the cold flow is large, but the Mooney viscosity is notably elevated by silane modification in many cases. Further, gel having a visible size is produced in the isolated copolymer in many cases, and a room for improvement has still been left from the viewpoint of the processability and the physical properties.
It has been proposed by the present applicants that the problems described above can be solved by reacting the polymer having an active end described above with a hydrocarbyloxysilane compound and subsequently subjecting the production product to secondary reaction with a specific compound (refer to, for example, a patent document 4).

Patent document 1: Japanese Patent Application Laid-Open No. 201371/2003
Patent document 2: Japanese Patent Application Laid-Open No. 233993/2001
Patent document 3: Japanese Patent Application Laid-Open No. 80205/2000
Patent document 4: Japanese Patent Application Laid-Open No. 290433/2000

### DISCLOSURE OF THE INVENTION

### Problems to be solved by the Invention

Taking the situations described above into consideration, the present invention relates to a pneumatic tire for use in a winter season which is provided with a tread rubber inhibited in a reduction of a DRY performance on a dry road surface and having an on-ice performance on an ice road surface and a WET performance on a wet road surface and which is controlled in a surface roughness of the above tread rubber.

### Means for solving the Problems

Intensive researches repeated by the present inventors in order to achieve the object described above have resulted in finding that the object can be achieved by allowing a tread surface roughness (Ra 75) measured based on JIS B0601 after running a specific distance on a specific road surface to fall in a specific range and allowing a length of whole sipes per ground contact area on the above tread surface to fall in a specific range. The present invention has been completed based on the above knowledge.
That is, the present invention provides:
(1) A pneumatic tire characterized by that a tread surface roughness (Ra 75) after running 3000 km on a paved road which is measured based on JIS B0601 is 10 to 100 µm and that a whole sipe length per 1 cm² of a ground contact area on the above tread surface is 1.0 to 4.0 cm.
(2) The pneumatic tire according to the above item (1),
   wherein a rubber component (A) in a tread rubber composition constituting the tread comprises natural rubber and/or synthetic conjugated diene base rubber, and carbon black (B) having a nitrogen adsorption specific surface area (N₂SA) of 120 m²/g or more is contained in an amount of 2 to 90 parts by mass per 100 parts by mass of the above rubber component (A).
(3) The pneumatic tire according to the above item (1) or (2),
   wherein among whole fillers contained in the tread rubber composition, silica (C) accounts for a proportion of 30 to 100 % by mass.
(4) The pneumatic tire according to the above item (3),
   wherein the silica (C) has a nitrogen adsorption specific surface area (N₂SA) of 120 to 220 m²/g and CTAB of 130 to 170 m²/g.
(5) The pneumatic tire according to any of the above items (1) to (4), wherein an inorganic filler (D) other than the silica (C) and/or a non-reinforcing organic filler (E) are contained in an amount of 3 to 50 parts by mass per 100 parts by mass of the rubber component (A).
(6) The pneumatic tire according to the above item (5),
   wherein the inorganic filler (D) or the non-reinforcing organic filler (E) in the rubber composition has an average particle diameter of 0.1 to 100 µm.
(7) The pneumatic tire according to the above item (5) or (6),
   wherein the inorganic filler (D) is represented by the following Formula (I):

   M•xSiO₂•yH₂O (I)

   (wherein M is oxide or hydroxide of at least one metal selected from Al, Mg, Ti and Ca, and both of x and y are an integer of 0 to 10) and has an average particle diameter of 100 µm or less.
(8) The pneumatic tire according to any of the above items (2) to (7), wherein at least one of the synthetic conjugated diene base rubbers constituting the rubber component (A) is a polybutadiene rubber (F) having a cis-1,4 bond content of 90 % or more.
(9) The pneumatic tire according to the above item (8),
wherein a proportion of the component (F) based on the rubber component (A) is 10 to 90 % by mass.

(10) The pneumatic tire according to any of the above items (2) to (9), wherein at least one of the synthetic conjugated diene base rubbers constituting the rubber component (A) is an end-modified conjugated diene base rubber (G) produced by a method comprising a step for reacting the active end of a conjugated diene base polymer having an active end which is obtained by polymerizing a conjugated diene base monomer comprising principally 1,3-butadiene and in which a content of a cis-1,4-bond in a conjugated diene part of a principal chain is 75 mole % or more with a hydrocarbyloxysilane compound I represented by the following Formula (II) and/or a partial condensation product thereof: 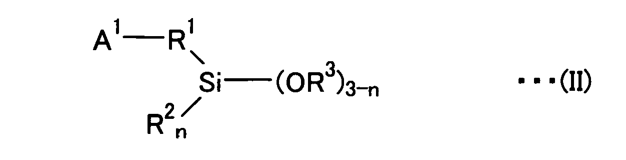 (wherein A¹ is a monovalent group having at least one functional group selected from an epoxy group, a thioepoxy group, an isocyanate group, a thioisocyanate group, a ketone group, a thioketone group, an aldehyde group, a thioaldehyde group, an imino group, an amide group, a trihydrocarbyl isocyanurate residue, a carboxylic acid ester residue, a thiocarboxylic acid ester residue, a carboxylic anhydride residue, a carboxylic halide residue and a dihydrocarbyl carbonate residue; R¹ is a single bond or a divalent inactive hydrocarbon group; R² and R³ each represent independently a monovalent aliphatic hydrocarbon group having 1 to 20 carbon atoms or a monovalent aromatic hydrocarbon group having 6 to 18 carbon atoms; n is an integer of 0 to 2; when a plurality of OR³ is present, a plurality of OR³ may be the same or different; and an active proton and an onium salt are not contained in a molecule).
(11) The pneumatic tire according to the above item (10), wherein the end-modified conjugated diene base rubber (G) is produced by a method comprising a secondary modification step (a) in which a condensation accelerating agent is added to carry out condensation reaction of an introduced hydrocarbyloxysilane compound residue with the unreacted hydrocarbyloxysilane compound after primary modification for reacting the hydrocarbyloxysilane compound I.
(12) The pneumatic tire according to the above item (11), wherein the end-modified conjugated diene base rubber (G) is produced by a method comprising a step (b) for carrying out secondary modification in which the hydrocarbyloxysilane compound is further added and reacted under the presence of the condensation accelerating agent after primary modification for reacting the hydrocarbyloxysilane compound I and/or the partial condensation product thereof.
(13) The pneumatic tire according to the above item (12),
   wherein the end-modified conjugated diene base rubber (G) is produced by using at least one selected from the hydrocarbyloxysilane compound I represented by Formula (II) and/or the partial condensation product thereof, a hydrocarbyloxysilane compound II represented by the following Formula (III) and/or a partial condensation product thereof and a hydrocarbyloxysilane compound III represented by the following Formula (IV) and/or a partial condensation product thereof as the hydrocarbyloxysilane compound used for the secondary modification step (b) described above: 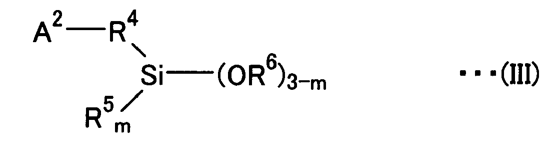 (wherein A² represents a monovalent group having at least one functional group selected from a cyclic tertiary amino group, a non-cyclic tertiary amino group, a pyridine residue, a sulfide group, a multisulfide group, a nitrile group, an onium salt residue of cyclic tertiary amine, an onium salt residue of non-cyclic tertiary amine, a group having an allyl or benzyl Sn bond, a sulfonyl group, a sulfinyl group and a nitrile group; R⁴ represents a single bond or a divalent inactive hydrocarbon group; R⁵ and R⁶ each represent independently a monovalent aliphatic hydrocarbon group having 1 to 20 carbon atoms or a monovalent aromatic hydrocarbon group having 6 to 18 carbon atoms; m is an integer of 0 to 2; and when a plurality of OR⁶ is present, a plurality of OR⁶ may be the same or different); 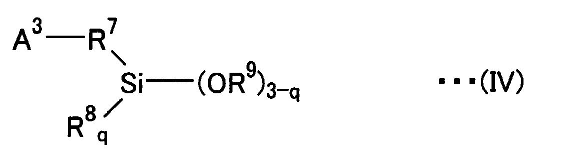 (wherein A³ represents a monovalent group having at least one functional group selected from a hydroxy group, a thiol group, a primary amino group, an onium salt residue of primary amine, a cyclic secondary amino group, an onium salt residue of cyclic secondary amine, a non-cyclic secondary amino group and an onium salt residue of non-cyclic secondary amine; R⁷ represents a single bond or a divalent inactive hydrocarbon group; R⁸ and R⁹ each represent independently a monovalent aliphatic hydrocarbon group having 1 to 20 carbon atoms or a monovalent aromatic hydrocarbon group having 6 to 18 carbon atoms; q is an integer of 0 to 2; and when a plurality of OR⁹ is present, a plurality of OR⁹ may be the same or different).
(14) The pneumatic tire according to any of the above items (10) to (13), wherein the end-modified conjugated diene base rubber (G) is produced by using both of at least one selected from the group consisting of metal compounds represented by (1) to (3) described below and water as the condensation accelerating agent described above:
   (1) a salt of carboxylic acid having 3 to 30 carbon atoms with tin having an oxidation number of 2:

      Sn(OCOR¹⁰)₂

      (wherein R¹⁰ is an organic group having 2 to 29 carbon atoms, and when a plurality thereof is present, they may be the same or different),
   (2) a compound of tin having an oxidation number of 4 which satisfies the following formula:

      R¹¹ᵣSnA⁴ₜB¹₍₄₋ₜ₋ᵣ₎

      (wherein r is an integer of 1 to 3, and t is an integer of 1 or 2; t + r is an integer of 3 or 4; R¹¹ is an aliphatic hydrocarbon group having 1 to 30 carbon atoms; B¹ is a hydroxyl group or halogen; A⁴ is a group selected from (a) a carboxyl group having 2 to 30 carbon atoms, (b) a 1,3-dicarbonyl-containing group having 5 to 30 carbon atoms, (c) a hydrocarbyloxy group having 3 to 30 carbon atoms and (d) a siloxy group which is totally tri-substituted (may be the same or different) with a hydrocarbyl group having 1 to 20 carbon atoms and/or a hydrocarbyloxy group having 1 to 20 carbon atoms, and when a plurality of A⁴ is present, they may be the same or different) and
   (3) a titanium compound having an oxidation number of 4 which satisfies the following formula:

      A^{s}ₓTiB²₍₄₋ₓ₎

      (wherein x is an integer of 2 or 4; A⁵ is (e) a hydrocarbyloxy group having 3 to 30 carbon atoms or (f) a siloxy group which is totally tri-substituted with an alkyl group having 1 to 30 carbon atoms and/or a hydrocarbyloxy group having 1 to 20 carbon atoms, and when a plurality of A⁵ is present, they may be the same or different; and B² is a 1,3-dicarbonyl-containing group having 5 to 30 carbon atoms).
(15) The pneumatic tire according to any of the above items (10) to (14), wherein the conjugated diene base rubber (G) having an active end described above is produced by polymerizing a conjugated diene base monomer comprising principally 1,3-butadiene using a polymerization catalyst prepared by combining at least one compound selected from the respective components of (i), (ii) and (iii) described below: a component (i); a compound containing a rare earth element corresponding to an atomic number of 57 to 71 in the periodic table or a reaction product of the above compound with a Lewis base,
   a component (ii); alumoxane and/or an organic aluminum compound corresponding to AlR¹²R¹³R¹⁴ (wherein R¹² and R¹³ are the same or different and are a hydrocarbon group having 1 to 10 carbon atoms or a hydrogen atom, and R¹⁴ is a hydrocarbon group having 1 to 10 carbon atoms, provided that R¹⁴ may be the same as or different from R¹² or R¹³) and
   a component (iii); at least one halogen compound selected from the group consisting of a Lewis acid, a complex compound of metal halide and a Lewis base and an organic compound containing active halogen.
(16) The pneumatic tire according to any of the above items (10) to (15), wherein the conjugated diene base rubber (G) having an active end is an end-modified polybutadiene rubber having a cis-1,4 bond content of 90 % or more.
(17) The pneumatic tire according to the above item (16),
   wherein a proportion of the component (G) based on the rubber component (A) is 10 to 90 % by mass.
(18) The pneumatic tire according to any of the above items (1) to (17), wherein at least one of the synthetic conjugated diene base rubbers constituting the rubber component (A) is a halogenated butyl rubber (H).
(19) The pneumatic tire according to the above item (18),
   wherein a proportion of the component (H) based on the rubber component (A) is 10 to 90 % by mass.
(20) The pneumatic tire according to any of the above items (1) to (19), wherein a storage elastic modulus (E') of the tread rubber composition at -20°C is 5 to 40 MPa.
(21) The pneumatic tire according to any of the above items (1) to (20), wherein a foamed rubber is used on a surface of the tread part brought into substantial contact with a road surface.

According to the present invention, controlling a roughness and a whole sipe length on a surface of a tire tread after running a fixed distance on a paved road surface makes it possible to provide a pneumatic tire for use in a winter season which is inhibited in a reduction of a DRY performance on a dry road surface and which has an on-ice performance on an ice road surface and a WET performance on a wet road surface.

### BEST MODE FOR CARRYING OUT THE INVENTION

In the pneumatic tire of the present invention, a surface roughness (Ra 75) measured after running 3000 km on a paved road according to a central line average roughness observed when applying a 2RC filter prescribed in an appendix 2 (reference) of JIS B0601 has to be 10 to 100 µm, and a whole sipe length per 1 cm² of a ground contact area on the above tread surface has to be 1.0 to 4.0 cm. The effects of the present invention can be exerted, as described above1, by controlling a roughness of the tread surface after running, and the above roughness contributes principally to a constitution of the tire surface to a large extent and provides a large effect of enhancing an on-ice performance on a road surface having low µ particularly in the vicinity of 0°C. Also, the marked effects thereof are exerted by combination with patterns provided densely with sipes in order to discharge water through micro water channels. Further, the abrasion resistance can be maintained at a level at which no practical problems are involved.
The surface roughness (Ra 75) described above can be controlled by an inorganic filler (D), short fibers and a foaming agent which are described later. The surface roughness is preferably 10 to 50 µm.
Also, the whole sipe length can be controlled by the sipe density. The whole sipe length is preferably 1 to 3 µm.

Tread rubber composition:
The rubber described above is constituted preferably from a rubber composition comprising primarily a rubber component (A), carbon black (B), silica (C), an inorganic filler (D) other than the silica (C) and a non-reinforcing organic filler (E). The above components can be used, if necessary, in suitable combination.

### <Rubber component (A)>

The rubber component (A) may contain only natural rubber, only diene base synthetic rubber or both of them. A polybutadiene rubber (F) having a cis-1,4 bond content of 90 % or more, an end-modified conjugated diene base rubber (G), a butyl rubber, particularly a halogenated butyl rubber (H), a synthetic polyisoprene rubber and the like are preferably used as the synthetic conjugated diene base rubber described above.
The rigidity in a low temperature region is preferably reduced in order to enhance the on-ice performance, and all of the above components have a glass transition temperature of - 60°C or lower; natural rubber: -69 to -74°C; cis-1,4 polybutadiene: -95 to -110°C; and butyl rubber: -67 to -75°C. Use of the components having the above glass transition temperatures is advantageous since the tread rubber composition maintains a sufficiently high rubber elasticity even in a low temperature area and shows a good on-ice performance.

### <Component (F): polybutadiene rubber having a cis-1,4 bond content of 90 % or more>

At least one of the synthetic conjugated diene base rubbers constituting the rubber component (A) is preferably the polybutadiene rubber (F) having a cis-1,4 bond content of 90 % or more, and a proportion of the above component (F) based on the rubber component (A) falls in a range of preferably 10 to 90 % by mass, more preferably 30 to 70 % by mass. The component (F) has the lowest glass transition temperature among those of the rubber components described above and has a low rigidity even in a low temperature region, and it can provide a good on-ice performance. Further, it has the characteristic that it is excellent in an abrasion resistance and a low heat generating property.
The polybutadiene rubber (F) having a cis-1,4 bond content of 90 % or more is obtained by a Ziegler type catalyst which is prepared by using Ni, Co and Ti compounds and a Nd base catalyst. Among them, a polybutadiene rubber obtained by the Nd base catalyst has a highest proportion of a cis-1,4 bond.

### <Component (G): end-modified conjugated diene base rubber>

The end-modified conjugated diene base rubber (G) having a low glass transition temperature is preferably used as at least one of the synthetic conjugated diene base rubbers constituting the rubber component (A). End modification makes it possible to enhance further the reinforcing property with the filler.
In the component (G) described above, the active end of a conjugated diene base polymer having an active end in which a content of a cis-1,4-bond is 75 mole % or more is reacted with a hydrocarbyloxysilane compound, and then a hydrocarbyloxysilane compound residue introduced into the end is further reacted with a specific compound.

### <Production process for the component (G)>

A production process for the polymer having an active end in which a content of a cis-1,4-bond is 75 mole % or more shall not specifically be restricted, and all of a solution polymerization method, a gas phase polymerization method and a bulk polymerization method can be used. The solution polymerization method is particularly preferred. A polymerization form thereof may be either of a batch system and a continuous system.

### <Polymerization monomer>

The conjugated diene compound as the polymerization monomer includes, for example, 1,3-butadiene, isoprene, 1,3-pentadiene, 2,3-dimethylbutadiene, 2-phenyl-1,3-butadiene, 1,3-hexadiene and the like. They may be used alone or in combination of two or more kinds thereof. Among them, 1,3-butadiene is particularly preferred.
Further, a small amount of other hydrocarbon monomers may be coexistent with the above conjugated diene monomers, and the conjugated diene monomers account preferably for 80 mole % or more based on the whole monomers.

Polymerization catalyst:
A production process for an intermediate of the conjugated diene base polymer having a cis bond of 75 % shall not specifically be restricted, and publicly known processes can be used. The polymerization catalyst is preferably a catalyst prepared by combining each at least one compound selected from the respective components of (i), (ii) and (iii) described below.

### Component (i):

In the present invention, the component (i) in the catalyst system used for polymerization of the end active polymer is a compound containing a rare earth element of an atomic number of 57 to 71 in the periodic table or a reaction product of the above compound with a Lewis base. In this case, among the rare earth elements of an atomic number of 57 to 71, neodymium, praseodymium, cerium, lanthanum, gadolinium and the like or mixtures thereof are preferred, and neodymium is particularly preferred.

The rare earth element-containing compound described above is preferably a salt which is soluble in hydrocarbon solvents, and the salt includes, to be specific, carboxylic acid salts, alkoxides, β-diketone complexes, phosphoric acid salts and phosphorous acid salts of the rare earth elements described above. Among them, the carboxylic acid salts and the phosphoric acid salts are preferred, and the carboxylic acid salts are particularly preferred.
In this regard, the hydrocarbon solvents include saturated aliphatic hydrocarbons having 4 to 10 carbon atoms such as butane, pentane, hexane, heptane and the like, saturated alicyclic hydrocarbons having 5 to 20 carbon atoms such as cyclopentane, cyclohexane and the like, monoolefins such as 1-butene, 2-butene and the like, aromatic hydrocarbons such as benzene, toluene, xylene and the like and halogenated hydrocarbons such as methylene chloride, chloroform, trichloroethylene, perchloroethylene, 1,2-dichloroethane, chlorobenzene, bromobenzene, chlorotoluene and the like.
The carboxylic acid salts of the rare earth elements described above include compounds satisfying the following formula:

(R¹⁴-CO₂)₃M

and M is a rare earth element of an atomic number of 57 to 71 in the periodic table). In this case, R¹⁴ may be saturated or unsaturated, and it is preferably an alkyl group and an alkenyl group and may be linear, branched or cyclic. The carboxyl group is bonded to a primary, secondary or tertiary carbon atom. The above carboxylic acid salts include, for example, salts of octanoic acid, 2-ethyl-hexanoic acid, oleic acid, neodecanoic acid, stearic acid, benzoic acid, naphthenic acid, versatic acid (trade name, carboxylic acid in which a carboxyl group is bonded to a tertiary carbon atom, manufactured by Shell Chemicals Japan Ltd.) and the like.
Among them, the salts of 2-ethyl-hexanoic acid, neodecanoic acid, naphthenic acid and versatic acid are preferred.

The alkoxides of the rare earth elements described above include compounds satisfying the following formula:

(R¹⁵O)₃M

(wherein R¹⁵ is a hydrocarbon group having 1 to 20 carbon atoms, and M is a rare earth element of an atomic number of 57 to 71 in the periodic table). An alkoxy group represented by R¹⁵O includes a 2-ethyl-hexylalkoxy group, an oleylalkoxy group, a stearylalkoxy group, a phenoxy group, a benzylalkoxy group and the like. Among them, a 2-ethyl-hexylalkoxy group and a benzylalkoxy group are preferred.

The β-diketone complexes of the rare earth elements described above include acetylacetone complexes, benzoylacetone complexes, propionitrileacetone complexes, valerylacetone complexes and ethylacetylacetone complexes of the rare earth elements described above. Among them, the acetylacetone complexes and the ethylacetylacetone complexes are preferred.

The phosphoric acid salts and the phosphorous acid salts of the rare earth elements described above include salts of the rare earth elements described above with bis(2-ethylhexyl) phosphate, bis(1-methylheptyl) phosphate, bis(p-nonylphenyl) phosphate, bis(polyethylene glycol-p-nonylphenyl) phosphate, (1-methylheptyl) (2-ethylhexyl) phosphate, (2-ethylhexyl) (p-nonylphenyl) phosphate, mono-2-ethylhexyl 2-ethylhexylphosphonate, mono-p-nonylphenyl 2-ethylhexylphosphonate, bis(2-ethylhexyl) phosphinate, bis(1-methylheptyl) phosphinate, bis(p-nonylphenyl) phosphinate, (1-methylheptyl) (2-ethylhexyl) phosphinate, (2-ethylhexyl) (p-nonylphenyl) phosphinate and the like. Among them, preferred are the salts of the rare earth elements with bis(2-ethylhexyl) phosphate, bis(1-methylheptyl) phosphate, mono-2-ethylhexyl 2-ethylhexylphosphonate and bis(2-ethylhexyl) phosphinate.

Among the rare earth element-containing compounds described above, the phosphoric acid salts of neodymium and the carboxylic acid salts of neodymium are more preferred, and in particular, branched carboxylic acid salts of neodymium such as 2-ethylhexanoate of neodymium, neodecanoate of neodymium, versatate of neodymium and the like are most preferred.

Further, the component (i) may be a reaction product of the rare earth element-containing compound described above with a Lewis base. In the above reaction product, the rare earth element-containing compound is enhanced in a solubility in a solvent by the Lewis base, and it can stably be stored over a long period of time. The Lewis base used in order to readily dissolve the rare earth element-containing compounds described above in a solvent and stably store them over a long period of time is used in a proportion of 0 to 30 mole, preferably 1 to 10 mole per mole of the rare earth element in the form of a mixture of both components or a product obtained by reacting in advance both components. In this connection, the Lewis base includes acetylacetone, tetrahydrofuran, pyridine, N,N-dimethylformamide, thiophene, diphenyl ether, triethylamine, organic phosphorus compounds and monohydric or dihydric alcohols.
The rare earth element-containing compounds or the reaction products of the above compounds with the Lewis bases each described above as the component (i) can be used alone or in a mixture of two or more kinds thereof.

Component (ii):
In the present invention, the component (ii) in the catalyst system used for polymerization of the end active polymer is an organic aluminumoxy compound and/or an organic aluminum compound represented by the following formula:

   AlR¹⁶R¹⁷R¹⁸

   (wherein R¹⁶ and R¹⁷ are the same or different and represent a hydrocarbon group having 1 to 10 carbon atoms or a hydrogen atom, and R¹⁸ is a hydrocarbon group having 1 to 10 carbon atoms, provided that R¹⁸ may be the same as or different from R¹⁶ or R¹⁷)_{.}

The organic aluminumoxy compound, so-called alumoxane includes methylaluminoxane, ethylaluminoxane, propylaluminoxane, butylaluminoxane, chloroaluminoxane and the like. Addition of aluminoxane sharpens the molecular weight distribution and enhances as well an activity of the catalyst.

The organic aluminum compound described above includes trimethylaluminum, triethylaluminum, tri-n-propylaluminum, triisopropylaluminum, tri-n-butylaluminum, triisobutylaluminum, tri-t-butylaluminum, tripentylaluminum, trihexylaluminum, tricyclohexylaluminum, trioctylaluminum; hydrogenated diethylaluminum, hydrogenated di-n-propylaluminum, hydrogenated di-n-butylaluminum, hydrogenated diisobutylaluminum, hydrogenated dihexylaluminum, hydrogenated diisohexylaluminum, hydrogenated dioctylaluminum, hydrogenated diisooctylaluminum; ethylaluminum dihydride, n-propylaluminum dihydride, isobutylaluminum dihydride and the like. Among them, triethylaluminum, triisobutylaluminum, hydrogenated diethylaluminum and hydrogenated diisobutylaluminum are preferred. The organic aluminum compounds as the component (ii) described above can be used alone or in a mixture of two or more kinds thereof.

Component (iii):
In the present invention, the component (iii) in the catalyst system used for polymerization of the end active polymer is at least one halogen compound selected from the group consisting of a Lewis acid, a complex compound of metal halide and a Lewis base and an organic compound containing active halogen.
The Lewis acid described above has a Lewis acidity and is soluble in hydrocarbons. To be specific, capable of being shown as the examples thereof are methylaluminum dibromide, methylaluminum dichloride, ethylaluminum dibromide, ethylaluminum dichloride, butylaluminum dibromide, butylaluminum dichloride, dimethylaluminum bromide, dimethylaluminum chloride, diethylaluminum bromide, diethylaluminum chloride, dibutylaluminum bromide, dibutylaluminum chloride, methylaluminum sesquibromide, methylaluminum sesquichloride, ethylaluminum sesquibromide, ethylaluminum sesquichloride, dibutyltin dichloride, aluminum tribromide, antimony trichloride, antimony pentachloride, phosphorus trichloride, phosphorus pentachloride, tin tetrachloride, silicon tetrachloride and the like. Among them, preferred are diethylaluminum chloride, ethylaluminum sesquichloride, ethylaluminum dichloride, diethylaluminum bromide, ethylaluminum sesquibromide and ethylaluminum dibromide.
Further, reaction products of alkylaluminums with halogens such as reaction products of triethylaluminum with bromine can be used as well.

The metal halides constituting the complex compounds of the metal halides with the Lewis bases include beryllium chloride, beryllium bromide, beryllium iodide, magnesium chloride, magnesium bromide, magnesium iodide, calcium chloride, calcium bromide, calcium iodide, barium chloride, barium bromide, barium iodide, zinc chloride, zinc bromide, zinc iodide, cadmium chloride, cadmium bromide, cadmium iodide, mercury chloride, mercury bromide, mercury iodide, manganese chloride, manganese bromide, manganese iodide, rhenium chloride, rhenium bromide, rhenium iodide, copper chloride, copper iodide, silver chloride, silver bromide, silver iodide, gold chloride, gold iodide, gold bromide and the like. Among them, magnesium chloride, calcium chloride, barium chloride, manganese chloride, zinc chloride and copper chloride are preferred, and magnesium chloride, manganese chloride, zinc chloride and copper chloride are particularly preferred.

The Lewis bases constituting the complex compounds of the metal halides with the Lewis bases are preferably phosphorus compounds, carbonyl compounds, nitrogen compounds, ether compounds, alcohols and the like. To be specific, they include tributyl phosphate, tri-2-ethylhexyl phosphate, triphenyl phosphate, tricresyl phosphate, triethylphosphine, tributylphosphine, triphenylphosphine, diethylphosphinoethane, diphenylphosphinoethane, acetylacetone, benzoylacetone, propionitrileacetone, valerylacetone, ethylacetylacetone, methyl acetoacetate, ethyl acetoacetate, phenyl acetoacetate, dimethyl malonate, diethyl malonate, diphenyl malonate, acetic acid, octanoic acid, 2-ethylhexanoic acid, oleic acid, stearic acid, benzoic acid, naphthenic acid, versatic acid, triethylamine, N,N-dimethylacetamide, tetrahydrofuran, diphenyl ether, 2-ethylhexyl alcohol, oleyl alcohol, stearyl alcohol, phenol, benzyl alcohol, 1-decanol, lauryl alcohol and the like. Among them, preferred are tri-2-ethylhexyl phosphate, tricresyl phosphate, acetylacetone, 2-ethylhexanoic acid, versatic acid, 2-ethylhexyl alcohol, 1-decanol and lauryl alcohol.

The Lewis bases described above are reacted in a proportion of 0.01 to 30 mole, preferably 0.5 to 10 mole per mole of the metal halide described above. Use of the reaction products with the above Lewis bases makes it possible to reduce metals remaining in the polymer.
The organic compound containing active halogen described above includes benzyl chloride and the like.

In the present invention, the amounts or the composition ratios of the respective components in the catalyst system used for polymerization of the conjugated diene base polymer are suitably selected according to the purposes or necessity thereof. Among them, the component (i) is used preferably in a proportion of 0.00001 to 1.0 millimole, more preferably 0.0001 to 0.5 millimole based on 100 g of the conjugated diene base compound. Controlling a use amount of the component (i) to the range described above provides the excellent polymerization activity and makes a deashing step unnecessary.
Also, a proportion of the component (i) to the organic aluminum compound of the component (ii) is 1 : 1 to 1 : 700, preferably 1 : 3 to 1 : 500 in terms of a mole ratio of the component (i) : the organic aluminum compound of the component (ii).
Further, a proportion of the component (i) to the halogen contained in the component (iii) is 1 : 0.1 to 1 : 30, preferably 1 : 0.2 to 1 : 15 and more preferably 1 : 2.0 to 1 : 5.0 in terms of a mole ratio.

A proportion of aluminum contained in the alumoxane which is the component (ii) to the component (i) is 1 : 1 to 700 : 1, preferably 3 : 1 to 500 : 1 in terms of a mole ratio. Controlling the above catalyst amount or constitutional component ratios to the ranges described above allows the catalyst to act at a high activity and makes a step for removing a catalyst residue unnecessary, and therefore it is preferred.
Further, the polymerization reaction may be carried out under the coexistence of hydrogen gas for the purpose of controlling a molecular weight of the polymer in addition to the components (i) to (iii) described above.
A conjugated diene compound such as 1,3-butadiene and the like in addition to the components (i), the component (ii) and the component (iii) described above may be used, if necessary, as the catalyst component in a small amount, to be specific, in a proportion of 0 to 1000 mole per mole of the compound of the component (i). The conjugated diene compound such as 1,3-butadiene and the like is not essential as the catalyst component, but use thereof in combination provides an advantage of enhancing markedly the catalyst activity.

The catalyst described above is produced, for example, by dissolving the component (i) to the component (iii) in a solvent and reacting them, if necessary, with the conjugated diene base compound such as 1,3-butadiene and the like.
In the above case, an addition order of the respective components shall not specifically be restricted, and the above respective components are preferably mixed in advance, reacted and ripened from the viewpoint of enhancing the polymerization activity and shortening the polymerization initiation induction time. In this connection, the ripening temperature is about 0 to 100°C, preferably 20 to 80°C. If it is lower than 0°C, ripening is less liable to be sufficiently carried out, and if it exceeds 100°C, a reduction in the catalyst activity and broadening of the molecular weight distribution are brought about in a certain case.
The ripening time shall not specifically be restricted, and the components can be ripened as well by bringing them into contact in the line before adding them to the polymerization reaction bath. Usually, a ripening time of 0.5 minute or longer is sufficient, and the solution is stable for several days.
In the above polymerization, all the raw materials participating in the polymerization such as the catalyst, the solvent, the monomers and the like are used preferably after substantially removing reaction inhibitors such as water, oxygen, carbon dioxide, protic compounds and the like from them.
In the polymer according to the present invention which is used in the reaction of the primary modification, at least 10 % of the polymer chain has preferably a living property.

### <Primary modification and modifying agent>

In the above primary modification reaction method, a hydrocarbyloxysilane compound represented by the following Formula (II) and/or a partial condensation product thereof can preferably be used as the hydrocarbyloxysilane compound used for reaction with an active end of the polymer: 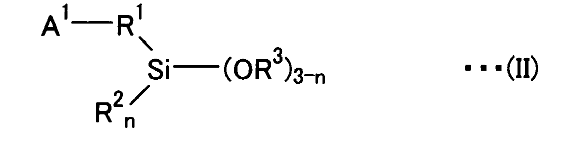 (wherein A¹ is a monovalent group having at least one functional group selected from an epoxy group, a thioepoxy group, an isocyanate group, a thioisocyanate group, a ketone group, a thioketone group, an aldehyde group, a thioaldehyde group, an imino group, an amide group, a trihydrocarbyl isocyanurate residue, a carboxylic acid ester residue, a thiocarboxylic acid ester residue, a carboxylic anhydride residue, a carboxylic halide residue and a dihydrocarbyl carbonate residue; R¹ is a single bond or a divalent inactive hydrocarbon group; R² and R³ each represent independently a monovalent aliphatic hydrocarbon group having 1 to 20 carbon atoms or a monovalent aromatic hydrocarbon group having 6 to 18 carbon atoms; n is an integer of 0 to 2; when a plurality of OR³ is present, a plurality of OR³ may be the same or different; and an active proton and an onium salt are not contained in a molecule).
In the above case, the partial condensation product is a compound prepared by converting a part (not all) of SiOR in the hydrocarbyloxysilane compound to a SiOSi bond by condensation.

In Formula (II) described above, the imino group out of the functional groups in A¹ includes a ketimine group, an aldimine group and an amidine group, and the (thio)carboxylic acid ester residue includes unsaturated carboxylic acid ester residues such as acrylate residues and methacrylate residues. Further, alkaline metals, alkaline earth metals, Al, Sn, Zn and the like can be listed as metals in the metal salts of (thio)carboxylic acid.
An alkylene group having 1 to 20 carbon atoms can preferably be listed as the divalent inactive hydrocarbon group out of the groups represented by R¹. The above alkylene group may be linear, branched or cyclic, and the linear group is particularly suited. The examples of the above linear alkylene group include methylene, ethylene, trimethylene, tetramethylene, pentamethylene, hexamethylene, octamethylene, decamethylene, dodecamethylene and the like.

An alkyl group having 1 to 20 carbon atoms, an alkenyl group having 2 to 18 carbon atoms, an aryl group having 6 to 18 carbon atoms, an aralkyl group having 7 to 18 carbon atoms and the like can be listed as R² and R³. In this regard, the alkyl group and the alkenyl group each described above may be linear, branched or cyclic, and the examples thereof include methyl, ethyl, n-propyl, isopropyl, n-butyl, isobutyl, sec-butyl, tert-butyl, pentyl, hexyl, octyl, decyl, dodecyl, cyclopentyl, cyclohexyl, vinyl, propenyl, allyl, hexenyl, octenyl, cyclopentenyl, cyclohexenyl and the like.
The above aryl group may have a substituent such as a lower alkyl group and the like on an aromatic ring, and the examples thereof include phenyl, tolyl, xylyl, naphthyl and the like. Further, the above aralkyl group may have a substituent such as a lower alkyl group and the like on an aromatic ring, and the examples thereof include benzyl, phenethyl, naphthylmethyl and the like.
The term n is an integer of 0 to 2, preferably 0, and it is necessary that an active proton and an onium salt are not contained in the molecule.

The hydrocarbyloxysilane compound represented by the above Formula (II), for example, a (thio)epoxy group-containing hydrocarbyloxysilane compound includes preferably 2-glycidoxyethyltrimethoxysilane, 2-glycidoxyethyltriethoxysilane, (2-glycidoxyethyl)methyldimethoxysilane, 3-glycidoxypropyltrimethoxysilane, 3-glycidoxypropyltriethoxysilane, (3-glycidoxyepropyl)methyldimethoxysilane, 2-(3,4-epoxycyclohexyl)ethyltrimethoxysilane, 2-(3,4-epoxycyclohexyl)ethyltriethoxysilane, 2-(3,4-epoxycyclohexyl)ethyl(methyl)dimethoxysilane and compounds obtained by substituting an epoxy group in the above compounds with a thioepoxy group. Among them, 3-glycidoxypropyltrimethoxysilane and 2-(3,4-epoxycyclohexyltrimethoxysilane are particularly suited.

The imino group-containing hydrocarbyloxysilane compound includes preferably N-(1,3-dimethylbutylidene)-3-(triethoxysilyl)-1-propaneamine, N-(1-methylethylidene)-3-(triethoxysilyl)-1-propaneamine, N-ethylidene-3-(triethoxysilyl)-1-propaneamine, N-(1-methylpropylidene)-3-(triethoxysilyl)-1-propaneamine, N-(4-N,N-dimethylaminobenzylidene)-3-(triethoxysilyl)-1-propaneamine, N-(cyclohexylidene)-3-(triethoxysilyl)-1-propaneamine and trimethoxysilyl compounds, methyldiethoxysilyl compounds, ethyldiethoxysilyl compounds, methyldimethoxysilyl and ethyldimethoxysilyl compounds each corresponding to the above triethoxysilyl compounds. Among them, N-(1-methylpropylidene)-3-(triethoxysilyl)-1-propaneamine and N-(1,3-dimethylbutylidene)-3-(triethoxysilyl)-1-propaneamine are particularly suited.

Further, the following compounds can be listed as the other hydrocarbyloxysilane compounds. That is, 1-[3-(triethoxysilyl)propyl]-4,5-dihydroimidazole, 1-[3-(trimethoxysilyl)propyl]-4,5-dihydroimidazole, 3-[10-(triethoxysilyl)decyl]-4-oxazoline and the like can be listed as the imino(amidine) group-containing compound. Among them, capable of being preferably listed are 3-(1-hexamethyleneimino)propyl(triethoxy)silane, (1-hexamethyleneimino)methyl(trimethoxy)silane, 1-[3-(triethoxysilyl)propyl]-4,5-dihydroimidazole and 1-[3-(trimethoxysilyl)propyl]-4,5-dihydroimidazole. Further, they include N-(3-triethoxysilylpropyl)-4,5-dihydroimidazole, N-(3-isopropoxysilylpropyl)-4,5-dihydroimidazole, N-(3-methyldiethoxysilylpropyl)-4,5-dihydroimidazole and the like. Among them, N-(3-triethoxysilylpropyl)-4,5-dihydroimidazole is preferred.

Also, the carboxylic acid ester group-containing compound includes 3-methacryloyloxypropyltriethoxysilane, 3-methacryloyloxypropyltrimethoxysilane, 3-methacryloyloxypropylmethyldiethoxysilane, 3-methacryloyloxypropyltriisopropoxysilane and the like. Among them, 3-methacryloyloxypropyltrimethoxysilane is preferred. Further, the isocyanate group-containing compound includes 3-isocyanatepropyltrimethoxysilane, 3-isocyanatepropyltriethoxysilane, 3-isocyanatepropylmethyldiethoxysilane, 3-isocyanatepropyltriisopropoxysilane and the like. Among them, 3-isocyanatepropyltriethoxysilane is preferred. Also, the carboxylic anhydride-containing compound includes 3-triethoxysilylpropylsuccinic anhydride, 3-trimethoxysilylpropylsuccinic anhydride, 3-methyldiethoxysilylpropylsuccinic anhydride and the like. Among them, 3-triethoxysilylpropylsuccinic anhydride is preferred.
The above hydrocarbyloxysilane compounds may be used alone or in combination of two or more kinds thereof. Further, the partial condensation compounds of the hydrocarbyloxysilane compounds described above can be used as well.

### <Secondary modification>

In the primary modification described above, the polymer having an active end is first reacted at the above end with the hydrocarbyloxysilane compound described above, and required is any of (1) a method in which the introduced residue is subsequently reacted with carboxylic acid partial ester of polyhydric alcohol and stabilized and (2) a method in which the residue is reacted with the remaining or newly added hydrocarbyloxysilane compound under the presence of a condensation accelerating agent. The latter method (2) further includes the following methods (2-1) to (2-3). That is:
(2-1); a method in which the hydrocarbyloxysilane compound and the condensation accelerating agent are further added after the primary modification to carry out the secondary modification,
(2-2); a method in which the condensation accelerating agent is added after the primary modification to carry out condensation reaction of the hydrocarbyloxysilane compound residue introduced into the end with the unreacted hydrocarbyloxysilane compound and
(2-3); a method in which subsequently to the respective reactions of (2-1) and (2-2), the residue is further reacted with carboxylic acid partial ester of polyhydric alcohol and stabilized.
In this respect, the carboxylic acid partial ester of polyhydric alcohol means a partial ester which is an ester of polyhydric alcohol and carboxylic acid and which has one or more hydroxyl groups.

### <End stabilizing agent>

To be specific, esters of saccharides or modified saccharides having 4 or more carbon atoms with fatty acids are preferably used. The above esters include more preferably ester compounds obtained by bonding to polyhydric alcohols, one to three of (a) fatty acid partial esters with polyhydric alcohols, particularly partial esters (may be any of monoesters, diesters and trimesters) of saturated higher fatty acids or unsaturated higher fatty acids having 10 to 20 carbon atoms with polyhydric alcohols or (b) partial esters of polyvalent carboxylic acids with higher alcohols.

Saccharides (may be or may not be hydrogenated) having at least 3 hydroxyl groups and 5 or 6 carbon atoms, glycols and polyhydroxy compounds are preferably used as the polyhydric alcohols used for raw materials of the partial esters described above. Saturated or unsaturated higher fatty acids having 10 to 20 carbon atoms, for example, stearic acid, lauric acid and palmitic acid are preferably used as the raw material fatty acids.
Among the fatty acid partial esters of polyhydric alcohols, sorbitan fatty acid esters are preferred, and they include, to be specific, sorbitan monolauric acid ester, sorbitan monopalmtic acid ester, sorbitan monostearic acid ester, sorbitan tristearic acid ester, sorbitan monooleic acid ester and sorbitan trioleic acid ester.
The commercial products include SPAN 60 (sorbitan stearic acid ester), SPAN 80 (sorbitan monooleic acid ester) and SPAN 85 (sorbitan trioleic acid ester) as trade names of ICI Company.
An addition amount of the above partial esters is preferably 0.2 to 10 mole, particularly preferably 1 to 10 mole per mole of a hydrocarbyloxysilyl group contained in the polymer.

### <Modifying agent for secondary modification>

The hydrocarbyloxysilane compound I represented by Formula (II) and/or the partial condensation product thereof can be used as the hydrocarbyloxysilane compound described above in combination with a hydrocarbyloxysilane compound II represented by the following Formula (III) and/or a partial condensation product thereof: 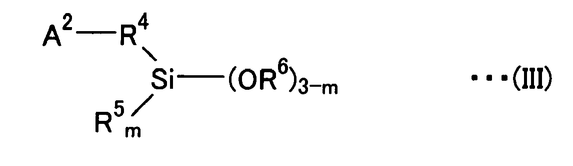 (wherein A² represents a monovalent group having at least one functional group selected from a cyclic tertiary amino group, a non-cyclic tertiary amino group, a pyridine residue, a sulfide group, a multisulfide group, a nitrile group, an onium salt residue of cyclic tertiary amine, an onium salt residue of non-cyclic tertiary amine, a group having an allyl or benzyl Sn bond, a sulfonyl group, a sulfinyl group and a nitrile group; R⁴ is a single bond or a divalent inactive hydrocarbon group; R⁵ and R⁶ each represent independently a monovalent aliphatic hydrocarbon group having 1 to 20 carbon atoms or a monovalent aromatic hydrocarbon group having 6 to 18 carbon atoms; m is an integer of 0 to 2; and when a plurality of OR⁶ is present, a plurality of OR⁶ may be the same or different) and a hydrocarbyloxysilane compound III represented by the following Formula (IV) and/or a partial condensation product thereof 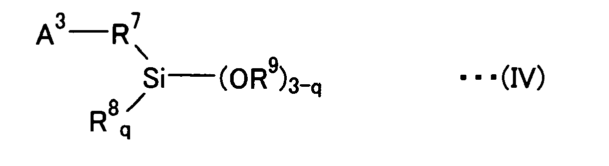 (wherein A³ represents a monovalent group having at least one functional group selected from a hydroxy group, a thiol group, a primary amino group, an onium salt residue of primary amine, a cyclic secondary amino group, an onium salt residue of cyclic secondary amine, a non-cyclic secondary amino group and an onium salt residue of non-cyclic secondary amine; R⁷ represents a single bond or a divalent inactive hydrocarbon group; R⁸ and R⁹ each represent independently a monovalent aliphatic hydrocarbon group having 1 to 20 carbon atoms or a monovalent aromatic hydrocarbon group having 6 to 18 carbon atoms; q is an integer of 0 to 2; and when a plurality of OR⁹ is present, a plurality of OR⁹ may be the same or different).

The above hydrocarbyloxysilane compound represented by Formula (III) and/or the partial condensation product thereof are not substantially reacted directly with the active end and remain as the unreacted compound in the reaction system, and therefore they are consumed for condensation with the hydrocarbyloxysilane compound residue introduced into the active end.
In Formula (III) described above, the non-cyclic tertiary amine among the groups represented by A² includes residues of N,N-(disubstituted) aromatic amines such as N,N-(disubstituted) aniline and the like, and the cyclic tertiary amine can contain (thio)ether as a part of a ring. The divalent inactive hydrocarbon group among the groups represented by R⁴ and the groups represented by R⁵ and R⁶ each are the same as explained for the groups represented by R¹, R² and R³ in Formula (I) described above. It is necessary that an active proton and an onium salt are not contained in the molecule.

The hydrocarbyloxysilane compound represented by the above Formula (III), for example, the non-cyclic tertiary amino group-containing hydrocarbyloxysilane compound includes 3-dimethylaminopropyl(triethoxy)silane, 3-dimethylaminopropyl(trimethoxy)silane, 3-diethylaminopropyl(triethoxy)silane, 3-diethylaminopropyl(trimethoxy)silane, 2-dimethylaminopropyl(triethoxy)silane, 2-dimethylaminopropyl(trimethoxy)silane, 3-dimethylaminopropyl(diethoxy)methylsilane, 3-dibutylaminopropyl(triethoxy)silane and the like. Among them, 3-diethylaminopropyl(triethoxy)silane and 3-dimethylaminopropyl(triethoxy)silane are suited.
Also, the cyclic tertiary amino group-containing hydrocarbyloxysilane compound includes preferably 3-(1-hexamethyleneimino)propyl(triethoxy)silane, 3-(1-hexamethyleneimino)propyl(trimethoxy)silane, (1-hexamethyleneimino)methyl(trimethoxy)silane, (1-hexamethyleneimino)methyl(triethoxy)silane, 2-(1-hexamethyleneimino)ethyl(triethoxy)silane, 2-(1-hexamethyleneimino)ethyl(trimethoxy)silane, 3-(1-pyrrolidinyl)propyl(triethoxy)silane, 3-(1-pyrrolidinyl)propyl(trimethoxy)silane, 3-(1-heptamethyleneimino)propyl(triethoxy)silane, 3-(1-dodecamethyleneimino)propyl(triethoxy)silane, 3-(1-hexamethyleneimino)propyl(diethoxy)methylsilane and 3-(1-hexamethyleneimino)propyl(diethoxy)ethylsilane. In particular, 3-(1-hexamethyleneimino)propyl(triethoxy)silane is suited.
Further, 2-(trimethoxysilylethyl)pyridine, 2-(triethoxysilylethyl)pyridine, 4-ethylpyridine and the like can be listed as the other hydrocarbyloxysilane compounds.
The above hydrocarbyloxysilane compounds may be used alone or in combination of two or more kinds thereof. Further, partial condensation products of the above hydrocarbyloxysilane compounds can be used as well.

Next, in the embodiment of the method (2-1) described above, at least one selected from the hydrocarbyloxysilane compound I represented by Formula (II) and the partial condensation product thereof, the hydrocarbyloxysilane compound II represented by Formula (III) and the partial condensation product thereof and the hydrocarbyloxysilane compound III represented by Formula (IV) and the partial condensation product thereof can be used as the hydrocarbyloxysilane compound II condensed with the residue of the hydrocarbyloxysilane compound I described above which is introduced into the active end of the polymer.

In Formula (IV) described above, the primary amino group among the groups represented by A³ includes residues of aromatic amines such as aniline and the like, and the non-cyclic secondary amino group includes residues of N-(monosubstituted) aromatic amines such as N-(monosubstituted) aniline and the like. Further, the onium salt residue of the non-cyclic tertiary amine includes residues of onium salts of N,N-(disubstituted) aromatic amines such as N,N-(disubstituted) aniline and the like. Also, in the cases of the cyclic secondary amino group and the cyclic tertiary amino group, they can contain (thio)ether as a part of the ring. The divalent inactive hydrocarbon group among the groups represented by R⁷ and the groups represented by R⁸ and R⁹ each are the same as explained for the groups represented by R¹, R² and R³ in Formula (II) described above.
The hydrocarbyloxysilane compound represented by the above Formula (IV) includes, for example, 3-aminopropyltrimethoxysilane, 3-aminopropyltriethoxysilane, hydroxymethyltrimethoxysilane, hydroxymethyltriethoxysilane, mercaptomethyltrimethoxysilane, mercaptomethyltriethoxysilane, aminophenyltrimethoxysilane, aminophenyltriethoxysilane, 3-(N-methylamino)propyltrimethoxysilane, 3-(N-methylamino)propyltriethoxysilane, octadecyldimethyl-(3-trimethylsilylpropyl)ammonium chloride, octadecyldimethyl(3-triethylsilylpropyl)ammonium chloride, cyanomethyltrimethoxysilane, cyanomethyltriethoxysilane, sulfonylmethyltrimethoxysilane, sulfonylmethyltriethoxysilane, sulfinylmethyltrimethoxysilane, sulfinylmethyltriethoxysilane and the like.
The above hydrocarbyloxysilane compounds III may be used alone or in combination of two or more kinds thereof.
In the present invention, in the case of the method (2) described above in which the residue is reacted with the remaining or newly added hydrocarbyloxysilane compound under the presence of the condensation accelerating agent, the polymer having an active end is first reacted with a substantially stoichiometric amount of the hydrocarbyloxysilane compound I added to the reaction system, and a hydrocarbyloxysilyl group is introduced into substantially all of the above ends (primary modification). Further, the hydrocarbyloxysilyl group-containing compound is reacted with the hydrocarbyloxysilyl group introduced above, whereby the hydrocarbyloxysilane compound residue of a larger amount than an equivalent is introduced into the above active end. This allows further more effects of the low heat generating property and the processability to be obtained, and therefore the method (2) described above is preferred to the method (1).
In the present invention, in a case where the hydrocarbyloxysilane compound is an alkoxysilyl compound, condensation reaction between the hydrocarbyloxysilyl groups in the method (2) described above takes place preferably between (remaining or newly added) free alkoxysilane and an alkoxysilyl group of the polymer end or takes place preferably between the alkoxysilyl groups of the polymer ends in a certain case, and reaction between the free alkoxysilanes is not necessary. Accordingly, when the alkoxysilane compound is newly added, a hydrolytic property of an alkoxysilyl group thereof is preferably controlled so that it does not exceed a hydrolytic property of an alkoxysilyl group at the polymer end from the viewpoint of the efficiency. Suited is, for example, combination in which a compound containing a trimethoxysilyl group having a large hydrolytic property is used for the alkoxysilane I and in which a compound having an alkoxysilyl group (for example, a triethoxysilyl group) inferior in a hydrolytic property to the above group is used for the alkoxysilane II newly added. In other words, combination in which a triethoxysilyl group-containing compound is used for the alkoxysilane I and in which a trimethoxysilyl group-containing compound is used for the alkoxysilane II is included in the scope of the present invention, but it is not preferred from the viewpoint of the reaction efficiency.

### <Modification reaction>

In the modification reaction of the present invention, both of solution reaction and solid phase reaction can be used, and the solution reaction (may be a solution containing an unreacted monomer used in polymerization) is suited. A manner of the above modification reaction shall not specifically be restricted, and it may be carried out by means of a batch type reactor or may be carried out by a continuous system using an apparatus such as a multistage continuous reactor, an inline mixer and the like. Also, it is essential to carry out the above modification reaction before carrying out desolvent treatment, water treatment, heat treatment and various operations necessary for isolating the polymer after finishing the polymerization reaction.
The polymerization temperature for the conjugated diene base polymer can be used as it is for temperature in the modification reaction described above. To be specific, a temperature of 20 to 100°C is listed as the preferred range. If the temperature is lowered, the polymer tends to be increased in a viscosity, and if the temperature grows high, the polymerization active end is liable to be deactivated. Accordingly, both are not preferred.

Next, the secondary modification described above is carried out preferably under the presence of a condensation accelerating agent in order to accelerate the secondary modification. Combination of water with a metal compound which is usually known as a curing catalyst for alkoxy condensation curing type room temperature cross-linking (RTV) silicone can be used as the above condensation accelerating agent. For example, combination of water with carboxylic acid salt of tin and/or titanium alkoxide can preferably be listed. A method for adding the condensation accelerating agent to a reaction system of water shall not specifically be restricted. A solution of an organic solvent which is soluble in water such as alcohol and the like may be used, and water may be added, dispersed and dissolved directly in a hydrocarbon solution by using various chemical engineering methods.

### <Condensation accelerating agent>

The condensation accelerating agent described above comprises preferably at least one selected from the group consisting of metal compounds represented by (1) to (3) described below and water:
(1) a salt of carboxylic acid having 3 to 30 carbon atoms with tin having an oxidation number of 2:

   Sn(OCOR¹⁰)₂

   (wherein R¹⁰ is an organic group having 2 to 29 carbon atoms, and when a plurality thereof is present, they may be the same or different),
(2) a compound of tin having an oxidation number of 4 which satisfies the following formula:

   R¹¹ᵣSnA⁴ₜB¹₍₄₋ₜ₋ᵣ₎

   (wherein r is an integer of 1 to 3, and t is an integer of 1 or 2; t + r is an integer of 3 or 4; R¹¹ is an aliphatic hydrocarbon group having 1 to 30 carbon atoms; B¹ is a hydroxy group or halogen; A⁴ is a group selected from (a) a carboxyl group having 2 to 30 carbon atoms, (b) a 1,3-dicarbonyl group having 5 to 30 carbon atoms, (c) a hydrocarbyloxy group having 3 to 30 carbon atoms and (d) a group selected from siloxy groups which are totally tri-substituted (may be the same or different) with a hydrocarbyl group having 1 to 20 carbon atoms and/or a hydrocarbyloxy group having 1 to 20 carbon atoms, and when a plurality of A⁴ is present, they may be the same or different) and
(3) a titanium compound having an oxidation number of 4 which satisfies the following formula:

   A^{s}ₓTiB²₍₄₋ₓ₎

   (wherein x is an integer of 2 or 4; A⁵ is (a) an alkoxy group having 3 to 30 carbon atoms or (b) a siloxy group which is totally tri-substituted with an alkyl group having 1 to 30 carbon atoms and/or an alkoxy group having 1 to 20 carbon atoms, and when a plurality of A⁵ is present, they may be the same or different; and B² is a 1,3-dicarbonyl-containing group having 5 to 30 carbon atoms).

Capable of being suitably used as the carboxylic acid salt of tin described above are, to be specific, (1) dicarboxylic acid salts of divalent tin (particularly preferably carboxylic acid salts having 8 to 20 carbon atoms) and (2) dicarboxylic acid salts (including bis(hydrocarbyldicarboxylic acid) salts), bis(β-diketonate), alkoxy halides, monocarboxylic acid salt hydroxide, alkoxy(trihydrocarbyl siloxide), alkoxy(dihydrocarbylalkoxy siloxide), bis(trihydrocarbyl siloxide) and bis(dihydrocarbyl siloxide) of tetravalent dihydrocarbyltin. A hydrocarbyl group bonded directly to tin has preferably 4 or more carbon atoms, particularly preferably 4 to 8 carbon atoms.

The titanium compound described above includes tetraalkoxide, dialkoxybis(β-diketonate) and tetrakis(trihydrocarbyloxy siloxide) of titanium having an oxidation number of 4, and tetraalkoxide of titanium is particularly suitably used.
Forms such as solutions of the simple body, alcohols and the like and dispersed micelles in hydrocarbon solvents are suitably used as water, and in addition thereto, moisture contained potentially in compounds which can discharge water in a reaction system such as water adsorbed on a surface of a solid matter, hydrated water of hydrates and the like can effectively be used as well if necessary.

Both components forming the condensation accelerating agent may be added separately to the reaction system or may be added in the form of a mixture by mixing them immediately before use, but it is not preferred to store the mixture over a long period of time since decomposition of the metal compound is brought about.
In respect to a use amount of the condensation accelerating agent, the mole ratios of the mole numbers of metal contained in the metal compound described above and water which is effective for the reaction based on the whole amount of the hydrocarbyloxysilyl groups present in the reaction system are preferably 0.1 or more for both components. The upper limits thereof are varied according to the purposes and the reaction conditions, and effective water having a mole ratio of 0.5 to 3 based on the whole amount of the hydrocarbyloxysilyl groups bonded to the ends of the polymer at a stage before the condensation treatment is preferably present. A mole ratio of the metal contained in the metal compound described above to water which is effective for the reaction is varied according to the reaction conditions required, and it is suitably 1/0.5 to 1/20.

Further, it is possible as well in the present invention to react the hydrocarbyloxysilane compound with the active end of the polymer, then add the condensation accelerating agent to accelerate reaction and thereafter further react them with the carboxylic acid ester compound of polyhydric alcohol described above.
In the present invention, publicly know antioxidants and short stop agents can be added, if desired, at a step after introducing the hydrocarbyloxysilane compound residue into the active end of the polymer in the above modification reaction.
After carrying out the modification treatment in the manner described above, publicly known after-treatments such as desolvent and the like are carried out, whereby the targeted modified polymer can be obtained. A polymer chain end-modified group of the above modified polymer can be analyzed by means of chromatography using a liquid as a carrier such as high performance liquid chromatography (HPLC), thin layer chromatography and the like and nuclear magnetic resonance spectroscopy (NMR).

### <End-modified conjugated diene base rubber>

A molecular weight distribution (Mw/Mn) of the polymer isolated before modifying the end-modified conjugated diene base rubber described above is 1.5 to 3.5, more preferably 1.5 to 2.6. A Mooney viscosity (ML₁₊₄, 100°C) thereof at 100°C is 10 to 150, more preferably 15 to 70.
A content of a cis-1,4 bond in a conjugated diene part on the principal chain is 75 mole % or more, more preferably 90 mole % or more. A content of a vinyl bond is preferably low, and it is preferably 1.5 mole % or less, more preferably 1.0 mole % or less. The monomer constituting the above conjugated diene base rubber is preferably polybutadiene rubber comprising substantially only 1,3-butadiene. A proportion of the above component (G) based on the rubber component (A) falls in a range of preferably 10 to 90 % by mass, more preferably 30 to 70 % by mass.
The polymer obtained after modified by using the modifying agent and the condensation accelerating agent each described above is provided with an excellent workability and enhanced in a reinforcing property with a filler by controlling various characteristics and a blending amount of the conjugated diene base rubber before the modification to the ranges described above, and the rubber composition which maintains a DRY performance and which has an excellent on-ice performance at a very low temperature to a vicinity of 0°C and an excellent WET performance can be obtained.

### <Component (H): halogenated butyl rubber>

The halogenated butyl rubber (H) can be used as at least one of the synthetic conjugated diene base rubbers constituting the rubber component (A). A proportion of the above component (H) based on the rubber component (A) falls in a range of preferably 10 to 90 % by mass, more preferably 15 to 50 % by mass. Controlling a proportion of the component (H) to the ranges described above makes it possible to maintain the on-ice performance and improve the abrasion resistance and the DRY driving stability. Further, use of the component (H) makes it possible to enhance the wet skid characteristic resistance and reduce the rolling resistance.
Among butyl base rubbers, the halogenated butyl rubber of the component (H) has a fast vulcanizing speed and is excellent in a heat resistance, an adhesive property and a compatibility with other unsaturated rubbers, and therefore the halogenated butyl rubber is preferred. The halogenated butyl rubber described above includes chlorinated butyl rubbers, brominated butyl rubbers, modified rubbers thereof and the like. For example, "Enjay Butyl HT10-66" (trade name, manufactured by Enjay Chemical Co., Ltd.) is available as the chlorinated butyl rubber, and "Bromobutyl 2255" (trade name, manufactured by Exxon Mobile Corporation) is available as the brominated butyl rubber. Also, chlorination or bromination-modified copolymers of copolymers of isomonoolefins with paramethylstyrene can be used as the modified rubbers, and they are available as, for example, "Expro 50" (trade name, manufactured by Exxon Mobile Corporation). The halogenated butyl rubber is preferably the chlorination or bromination-modified copolymers of the copolymers of isomonoolefins with paramethylstyrene.
The respective components of the above natural rubber, polybutadiene rubber, end-modified polybutadiene rubber and halogenated butyl rubber which are the rubber components can be used, if necessary, in suitable combination.
Further, a low styrene-butadiene rubber having a low styrene content can be used as the rubber component having a glass transition temperature of -60°C or lower.

### <Filler>

The pneumatic tire of the present invention has to be controlled in a surface roughness (Ra 75) on a surface of a tread after running on a paved road and a whole sipe length per 1 cm² of a ground contact area on the tread surface in order to obtain an excellent on-ice performance. However, an abrasion resistance of the tire staying in a state in which micro water channels are formed on the tread surface is inferior as compared with those of tires having a normal tread surface. Accordingly, highly reinforcing fillers having a fine particle diameter such as carbon black (B), silica (C) and the like are required in order to secure the abrasion resistance, and the inorganic filler (D) other than silica and the non-reinforcing organic filler (E) are preferably added in order to make it easy to form the micro water channels described above on the tread surface.

### <Reinforcing filler: (component B) carbon black>

Publicly known carbon blacks in which the ranges of a I₂ adsorption amount, a CTAB specific surface area, a N₂ adsorption amount, a DBP oil adsorption amount and the like are suitably selected can be used as the carbon black as long as the rubber layer is enhanced in mechanical performances and improved in a processability and the like. In respect to the kind of the carbon black, publicly known carbon blacks such as, for example, SAF, ISAF-LS, HAF, HAF-HS and the like can be used.
In respect to a content of the carbon black particularly in the tread rubber composition used in the present invention, carbon black having a nitrogen adsorption specific surface area of 120 m²/g or more is added in an amount of 2 to 90 parts by mass, preferably 10 to 60 parts by mass based on 100 parts by mass of the rubber component (A). Considering the abrasion resistance, carbon blacks of ISAF and SAF grades are preferred, and carbon blacks of a SAF grade are particularly preferred.

### <Reinforcing filler: (component C) silica>

Silica of the component (C) does not represent only silicon dioxide of a narrow sense and means silicic acid base fillers. To be specific, it includes, in addition to silicic anhydride, hydrous silicic acid (wet silica) and silicates such as calcium silicate, aluminum silicate and the like.
Among the whole fillers comprising carbon black of the component (B) of the reinforcing filler contained in the tread rubber composition described above, silica of the component (C), the inorganic filler of the component (D) other than silica and the organic filler of the non-reinforcing filler of the component (E), the silica (C) accounts for a proportion of preferably 30 to 100 % by mass. As a result thereof, the excellent on-ice performance and WET performance can be obtained. When emphasis is put particularly on the WET performance, a blending amount of silica is preferably increased.
Also, in order to obtain an abrasion resistance of the tread rubber in addition to the performances described above, preferred is wet silica of a fine particle base having a nitrogen adsorption specific surface area (N₂SA) of 120 to 220 m²/g and CTAB of 130 to 170 m²/g.
A content of silica is 5 to 95 parts by mass, preferably 15 to 80 parts by mass based on 100 parts by mass of the rubber component (A). The excellent on-ice performance and WET performance can be obtained as well by controlling a content of silica to the ranges described above.

In the present invention, when silica of the component (C) is used as the reinforcing filler, a silane coupling agent is preferably added in blending from the viewpoint that the reinforcing property and the dispersibility are further enhanced. The above silane coupling agent includes bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazole tetrasulfide, 3-triethoxysilylpropylbenzothiazole tetrasulfide, 3-triethoxysilylpropylmethacrylate monosulfide, 3-trimethoxysilylpropylmethacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide, dimethoxymethylsilylpropylbenzothiazole tetrasulfide and the like. Among them, bis(3-triethoxysilylpropyl) tetrasulfide and 3-trimethoxysilylpropylbenzothiazole tetrasulfide are preferred from the viewpoint of the effect of improving the reinforcing property. The above silane coupling agents may be used alone or in combination of two or more kinds thereof.
In respect to a blending amount of the silane coupling agent, it is added preferably in a proportion of 4 to 15 % by mass based on a blending amount of silica of the component (C).

### <Other fillers>

Further, the inorganic filler (D) other than silica (C) and/or the non-reinforcing organic filler (E) are preferably added in an amount of 3 to 50 parts by mass based on 100 parts by mass of the rubber component (A). An average particle diameter of the inorganic filler (D) or the non-reinforcing organic filler (E) in the rubber composition is preferably 0.1 to 100 µm, more preferably 1 to 90 µm in order to make it easy to form the micro water channels described above on the tread surface.by separation of the component (D) and the component (E) from the tread during running of the tire.

### <Component (D): inorganic filler other than silica>

The inorganic filler of the component (D) is represented by the following Formula (I) in which:

M•xSiO₂•yH₂O (I)

(wherein M is at least one oxide or hydroxide of metal selected from Al, Mg, Ti and Ca, and both of x and y are an integer of 0 to 10), and an average particle diameter thereof is preferably 100 µm or less. When both of x and y are 0, the inorganic compound powder represented by Formula (I) described above is at least one oxide or hydroxide of metal selected from Al, Mg, Ti and Ca.
The specific examples of the inorganic compound represented by Formula (I) include alumina (Al₂O₃), magnesium hydroxide (Mg(OH)₂), magnesium oxide (MgO₂), titan white (TiO₂), titan black (TiO₂ₙ₋₁), talc (3MgO·4SiO₂·H₂O), attapulgite (5MgO•8SiO₂•9H₂O) and the like. Further, calcium magnesium silicate (CaMgSiO₄) and magnesium silicate (MgSiO₃) exert as well the same effects as those of the inorganic compound of the present invention.

The inorganic filler represented by Formula (I) described above is preferably an inorganic compound represented by the following Formula (V) or aluminum hydroxide:

Al₂O₃•mSiO₂•nH₂O (V)

m in Formula (V) is an integer of 1 to 4, and n is an integer of 0 to 4.
The specific examples of the inorganic compound represented by Formula (V) described above include clay (Al₂O₃. 2SiO₂), kaolin (Al₂O₃·2SiO₂·2H₂O), pyrophyllite (Al₂O₃·4SiO₂·H₂O), bentonite (Al₂O₃·4SiO₂·2H₂O) and the like. Also, aluminum hydroxide used in the present invention includes as well alumina hydrate.

The component (D) described above has an average particle diameter of 100 µm or less, preferably 1 to 90 µm. The rubber composition which is particularly excellent in a WET performance and an on-ice performance can be obtained by using the component (D) having a large average particle diameter described above as compared with that of the reinforcing filler. The component (D) having a large particle diameter is eliminated from the composition during tire running to form a large space. For example, independent air bubbles in the foamed layer are put together with the space described above to make it possible to secure additional micro water channels, and the on-ice performance is enhanced.
The preferred compound powder (B) used in the present invention is clay (Al₂O₃·2SiO₂), aluminum hydroxide (Al(OH)₃) and alumina (Al₂O₃). The compound (B) having the characteristics described above which is used in the present invention can be used alone or in a mixture of two or more kinds thereof. Among them, aluminum hydroxide (Al(OH)₃) is particularly preferred.
The inorganic compound powder which does not satisfy the conditions described above, for example, those having other structures such as sulfides, sulfates and carbonates of metals selected from Al, Mg, Ti and Ca are not effective for enhancing the wet skid performance.

### <Non-reinforcing filler: (component E) organic filler>

The non-reinforcing organic filler of the component (E) includes wood powders, fruit husk powders, organic fillers of a cellulose base and the like, (meth)acryl base resin fine particles, epoxy resin fine particles and the like.

### <Foamed rubber composition>

The present invention relates to a tread prepared by using a non-foamed rubber composition but is effective as well for combination with a foamed rubber which is a conventional technique. The foamed rubber composition includes spherical independent bubbles in which a foaming agent is blended and a mixture of spherical independent air bubbles and tutbular air bubbles in which a foaming agent is combined with organic short fibers and/or fine particle-containing organic short fibers.
The foamed rubber composition described above is used preferably as a tread rubber having a foamed layer bringing substantially into contact with a road surface. The foamed rubber layer described above has a foaming rate falling in a range of 3 to 50 %, preferably 15 to 40 %. The abrasion resistance and the DRY performance can be maintained by controlling the foaming rate to the range described above, and the excellent on-ice performance can be secured by securing a volume of a concave part in the tread.

### <Physical properties of vulcanized rubber of the rubber composition>

In the rubber composition according to the present invention, the tread rubber composition has preferably a storage elastic modulus (E') of preferably 5 to 40 MPa, more preferably 10 to 35 MPa at -20°C as a physical property of the vulcanized rubber. The excellent effects of the present invention can be exerted by controlling the storage elastic modulus (E') to the range described above.

### <Measuring method of storage elastic modulus (E') at -20°C>

A vulcanized rubber sample obtained by an ordinary method is used to measure a storage elastic modulus (E') at - 20°C from temperature dispersion on the conditions of an initial distortion of 160 µm, a frequency of 52 Hz and a distortion of 1 % by means of a spectrometer manufactured by Ueshima Seisakusho Co., Ltd.

Pneumatic tire:
In a pneumatic tire having treads obtained by using the composition described above in detail, a rigidity of a tread rubber related to an on-ice performance and performances other than it are secured by characteristics of rubber constituting the composition, and in respect to the on-ice performance, a roughness of the surface obtained by running is secured by various kinds of the additives described above, for example, the inorganic filler which is the component (D) of a large particle diameter, whereby the characteristic surface condition which is not obtained by a conventional foamed rubber alone is obtained, and the on-ice performance exceeding that of a conventional foamed composition is obtained though the above composition is a non-foamed composition.
As shown above, the abrasion resistance tends to be disadvantageous as compared with those of conventional rubber compositions in a state in which micro water channels are formed on the surface, and combined use thereof with a reinforcing filler of a fine particle base is required. In this connection, the effect of enhancing the on-ice performance is markedly exerted by combining with patterns provided densely with sipes in order to discharge water through the micro water channels.
The pneumatic tire described above can be produced by an ordinary method using the tread rubber composition described above in detail.
The tire according to the present invention can suitably be applied not only to so-called passenger cars but also various vehicles such as trucks, buses and the like. It can suitably be used for structures in which slippage on an ice road surface has to be controlled, and the tread of the tire can be used, for example, for a tread for re-covering a retreaded tire, solid-core tires and the like as long as the slippage on an ice road surface described above has to be controlled. In a case of a pneumatic tire, not only air but also inert gases such as nitrogen and the like can be used as gas charged into an inside thereof.
Various blending agents used usually in the rubber industry can suitably be selected according to the purposes and used as other components used in the present invention. They may be used alone or in combination of two or more kinds thereof.

### EXAMPLES

Next, the present invention shall be explained in further details with reference to examples, but the present invention shall by no means be restricted by these examples. Various measurements and evaluations were carried out based on the following methods.

### Production Example 1 of end-modified butadiene

### <Preparation of catalyst>

A glass bottle having a volume of 100 ml which was equipped with a rubber stopper and which was dried and substituted with nitrogen was charged in the following order with 7.11 g of a cyclohexane solution (15.2 % by weight) of butadiene, 0.59 ml of a cyclohexane solution (0.56M) of neodymium neodecanoate, 10.32 ml of a toluene solution (3.23M in terms of an aluminum concentration) of methylaluminoxane MAO (PMAO manufactured by Tosoh Akzo Corp.) and 7.77 ml of a hexane solution (0.90M) of diisobutylaluminum hydride (manufactured by Kanto Chemical Co., Inc.), and the mixture was ripened at room temperature for 2 minutes. Then, 1.45 ml of a hexane solution (0.95M) of diethylaluminum chloride (manufactured by Kanto Chemical Co., Inc.) was added thereto, and the solution was ripened at room temperature for 15 minutes while occasionally stirring. A concentration of neodymium contained in the catalyst solution thus obtained was 0.011M (mole/liter).

### <Production of polymer intermediate>

A glass bottle having a volume of about 900 ml which was equipped with a rubber stopper and which was dried and substituted with nitrogen was charged respectively with a cyclohexane solution of butadiene which was dried and refined and dried cyclohexane to obtain 400 g of a cyclohexane solution of butadiene 12.5 wt %. Next, 2.28 ml (0.025 mmol in terms of neodymium) of the catalyst solution prepared above was added thereto, and polymerization was carried out in a warm water bath of 50°C for 1.0 hour.

### <Primary modifying treatment>

A hexane solution (1.0M) of 3-glycidoxypropyltrimethoxysilane (GPMOS) 23.5 millimole as a primary modifying agent was added to treat the solution at 50°C for 60 minutes.

### <Secondary modifying treatment>

Subsequently, 23.5 millimole of a hexane solution (1.0M) of N-(3-triethoxysilylpropyl)-4,5-dihydroimidazole (TEOSIPDI) (secondary modifying agent) was added thereto and stirred at 50°C for 30 minutes, and then 1.76 ml (corresponding to 70.5 eq/Nd) of a cyclohexane solution (1.01M) of tin bis(2-ethylhexanoate) and 32 µL (corresponding to 70.55 eq/Nd) of ion exchanged water as a condensation accelerating agent were added to treat the solution in a warm water bath of 50°C for 1.0 hour. Then, 2 ml of an isopropanol 5 % solution of 2,2'-methylene-bis(4-ethyl-6-t-butylphenol) (NS-5) as an antioxidant was added to the polymerization system to terminate the reaction, and reprecipitation was carried out in isopropanol containing a small amount of NS-5, and a precipitated substance was subjected to drum drying, whereby an end-modified polybutadiene rubber was obtained.
The polymer had a content of 94 mole % in a cis-1,4-bond, a vinyl content of 1.0 mole %, a molecular weight distribution Mw/Mn of 1.85 and a Mooney viscosity (ML₁₊₄, 100°C) of 48.

### Examples 1 to 20 and Comparative Examples 1 to 5

Rubber compositions of the respective examples and comparative examples were produced by an ordinary method based on the respective blend contents shown in Tables 1-1 to 1-3.
The respective rubber compositions obtained above were used for treads (foamed rubber layers) to produce radial tires for passenger cars for a test which have a tire size of 185/7015 by an ordinary method.

Physical properties of non-modified or modified conjugated diene base polymer:

### <Analytical method for micro structure>

A vinyl bond content (%) was measured by an infrared method (Morello method).

### <Measurement of number average molecular weight (Mn), weight average molecular weight (Mw) and molecular weight distribution (Mw/Mn)>

Measured by GPC (HLC-8020, manufactured by Tosoh Corp.) using a refractometer as a detector and shown in terms of monodispersed polystyrene used for a standard. GMHXL (manufactured by Tosoh Corp.) was used for the column, and tetrahydrofuran was used for the eluent.

### Evaluation of surface form of running tire:

### <Measurement of tread surface roughness (Ra 75)>

The tread surface roughness (Ra 75) after running 3000 km on a paved road was measured based on JIS B0601: 01. The measured results thereof are shown in Tables 1-1 to -3. The representative paved road includes concrete-paved and asphalt-paved roads, and the asphalt-paved road is usually used.

### <Measurement of a whole sipe length per 1 cm² of a ground contact area on a tread surface>

Ten samples of 1 cm² were obtained at random from the tread surface after running 3000 km on a paved road to measure the respective whole sipe lengths, and the whole sipe length was shown in terms of an average value of the ten samples. The measured results thereof are shown in Tables 1-1 to -3. Evaluation of tire performances:

### <On-ice performance>

Four tires (tire size: 185/70R15) for a test described above were mounted in a domestically produced passenger car of a 1600 cc class to confirm an on-ice braking performance thereof at an ice temperature of -1°C. The tire prepared in Comparative Example 1 was set as a control tire, and the on-ice performance was shown by (braking distance of the control tire)/(braking distance of the tires prepared in the other examples) X 100. The tires having a larger numerical value show that they are more excellent in an on-ice performance. The evaluation results thereof are shown in Tables 1-1 to -3.

### <DRY drivability (drivability on a dry road surface)>

The drivability on a dry road surface was evaluated according to feeling of a test driver by a five point method. It is shown that the larger the numerical value is, the more excellent the turning stability is.

### <Abrasion resistance>

After running 10,000 km on a paved road surface by an actual car, a depth of the remaining grooves was measured, and a running distance required for the tread to be abraded by 1 mm was relatively compared and shown by an index, wherein the value obtained in Comparative Example 1 was set to 100 (corresponding to 8000 km/mm). The larger index shows that the abrasion performance is better. The evaluation results thereof are shown in Tables 1-1 to -3.

**Table 1-1-1**

| | Comparative Example 1 | Example | | | |
|---|---|---|---|---|---|
| | | 1 | 2 | 3 | 4 |
| Natural rubber | 50 | 50 | 50 | 50 | 50 |
| Cis-1,4-polybutadiene rubber^{*1} | 50 | 50 | 50 | 50 | 50 |
| Modified polybutadiene rubber^{*2} | - | - | - | - | - |
| Brominated butyl rubber | - | - | - | - | - |
| Carbon black^{*3} | 30 | 30 | 45 | - | - |
| Carbon black^{*4} | - | - | - | 30 | 30 |
| Carbon black^{*5} | - | - | - | - | - |
| Silica^{*6} | 30 | 30 | 30 | 30 | 30 |
| Silane coupling agent^{*7} | 3.0 | 3.0 | 3.0 | 3.0 | 3.0 |
| Higilite^{*8} | - | 15.0 | 15.0 | 15.0 | 30.0 |
| Spindle oil | 20.0 | 20.0 | 20.0 | 20.0 | 20.0 |
| Stearic acid | 1.0 | 1.0 | 1.0 | 1.0 | 1.0 |
| Antioxidant (TPPD)^{*9} | 1.0 | 1.0 | 1.0 | 1.0 | 1.0 |
| Zinc oxide | 3.0 | 3.0 | 3.0 | 3.0 | 3.0 |
| Vulcanization accelerating agent (MBTS)^{*10} | 0.5 | 0.5 | 0.5 | 0.5 | 0.5 |
| Vulcanization accelerating agent (CBS)^{*11} | 1.6 | 1.6 | 1.6 | 1.6 | 1.6 |
| Sulfur | 1.5 | 1.5 | 1.5 | 1.5 | 1.5 |
| Foaming agent^{*12} | - | - | - | - | - |
| Urea | - | - | - | - | - |
| Fine particle-containing organic fiber^{*13} | - | - | - | - | - |
| Whole sipe length (cm/cm²) | 2.7 | 2.7 | 2.7 | 2.7 | 2.7 |
| E' (-20°C) | 24 | 26 | 33 | 25 | 27 |
| On-ice performance | 100 | 155 | 151 | 154 | 170 |
| DRY drivability | 100 | 98 | 101 | 99 | 99 |
| Abrasion resistance | 100 | 86 | 88 | 97 | 95 |
| Surface roughness (Ra 75) | 3 | 10 | 11 | 13 | 20 |

**Table 1-1-2**

| | Example | | | | |
|---|---|---|---|---|---|
| | 5 | 6 | 7 | 8 | 9 |
| Natural rubber | 50 | 50 | 50 | 50 | 50 |
| Cis-1,4-polybutadiene rubber^{*1} | 50 | 50 | 50 | 50 | 50 |
| Modified polybutadiene rubber^{*2} | - | - | - | - | - |
| Brominated butyl rubber | - | - | - | - | - |
| Carbon black^{*3} | - | - | - | - | - |
| Carbon black^{*4} | 30 | - | - | - | - |
| Carbon black^{*5} | - | 30 | 30 | 30 | 30 |
| Silica^{*6} | 30 | 30 | 30 | 30 | 30 |
| Silane coupling agent^{*7} | 3.0 | 3.0 | 3.0 | 3.0 | 3.0 |
| Higilite^{*8} | 45.0 | 15.0 | 30.0 | 45.0 | 5.0 |
| Spindle oil | 20.0 | 20.0 | 20.0 | 20.0 | 20.0 |
| Stearic acid | 1.0 | 1.0 | 1.0 | 1.0 | 1.0 |
| Antioxidant (TPPD)^{*9} | 1.0 | 1.0 | 1.0 | 1.0 | 1.0 |
| Zinc oxide | 3.0 | 3.0 | 3.0 | 3.0 | 3.0 |
| Vulcanization accelerating agent (MBTS)^{*10} | 0.5 | 0.5 | 0.5 | 0.5 | 0.5 |
| Vulcanization accelerating agent (CBS)^{*11} | 1.6 | 1.6 | 1.6 | 1.6 | 1.6 |
| Sulfur | 1.5 | 1.5 | 1.5 | 1.5 | 1.5 |
| Foaming agent^{*12} | - | - | - | - | 2.5 |
| Urea | - | - | - | - | 2.5 |
| Fine particle-containing organic fiber^{*13} | - | - | - | - | 2.0 |
| Whole sipe length (cm/cm²) | 2.7 | 2.7 | 2.7 | 2.7 | 2.7 |
| E' (-20°C) | 26 | 27 | 26 | 29 | 10 |
| On-ice performance | 139 | 156 | 173 | 142 | 168 |
| DRY drivability | 100 | 99 | 98 | 98 | 97 |
| Abrasion resistance | 93 | 102 | 96 | 88 | 97 |
| Surface roughness (Ra 75) | 32 | 18 | 27 | 39 | 27 |

| | | | | | |
|---|---|---|---|---|---|
| Remarks: *1. Cis-1,4-polybutadiene rubber: (trade name: UBEPOL 150L, manufactured by Ube Industries, Ltd.) *2. End-modified polybutadiene rubber: obtained in Production Example 1 *3. Carbon black: (HAF, manufactured by Tokai Carbon Co., Ltd.) *4. Carbon black: (ISAF, manufactured by Tokai Carbon Co., Ltd.) *5. Carbon black: (N134 (N₂SA: 146 m²/g), manufactured by Asahi Carbon Co., Ltd.) *6. Silica: (Nipsil AQ, manufactured by TOSOH SILICA CORPORATION) *7. Silane coupling agent: (Si69, manufactured by Degussa AG.) *8. Higilite: H-100-ME, average particle diameter: 73 µm, manufactured by Showa Denko K.K. *9. Antioxidant (N-isopropyl-N'-phenyl-p-phenylenediamine) *10. Vulcanization accelerating agent (MBTS: dibenzothiazyl disulfide) *11. Vulcanization accelerating agent (CBS: N-cyclohexyl-2-sulfeneamide) *12. Foaming agent (DNPT: dinitrosopentamethylenetetraamine) *13. Fine particle-containing organic fiber: resin constituting the fiber (polyethylene; melting point: 132°C), fine particle content: 15 parts by mass, average particle diameter of fine particles: 20 µm, average diameter of fibers: 32 µm, average length of fibers: 2 mm). | | | | | |

**Table 1-2-1**

| | Example | | | | |
|---|---|---|---|---|---|
| | 10 | 11 | 12 | 13 | 14 |
| Natural rubber | 50 | 40 | 40 | 80 | 100 |
| Cis-1,4-polybutadiene rubber^{*1} | - | - | - | 20 | - |
| Modified polybutadiene rubber^{*2} | 50 | 40 | 40 | - | - |
| Brominated butyl rubber | - | 20 | 20 | - | - |
| Carbon black^{*3} | - | - | - | - | - |
| Carbon black^{*4} | 30 | 30 | - | - | - |
| Carbon black^{*5} | - | - | 30 | 40 | 40 |
| Silica^{*6} | 30 | 30 | 30 | 40 | 40 |
| Silane coupling agent^{*7} | 3.0 | 3.0 | 3.0 | 4.0 | 4.0 |
| Higilite^{*8} | 15.0 | 15.0 | 15.0 | 15.0 | 30.0 |
| Spindle oil | 20.0 | 20.0 | 20.0 | 20.0 | 20.0 |
| Stearic acid | 1.0 | 1.0 | 1.0 | 1.0 | 1.0 |
| Antioxidant (TPPD)^{*9} | 1.0 | 1.0 | 1.0 | 1.0 | 1.0 |
| Zinc oxide | 3.0 | 3.0 | 3.0 | 3.0 | 3.0 |
| Vulcanization accelerating agent (MBTS)^{*10} | 0.5 | 0.5 | 0.5 | 0.5 | 0.5 |
| Vulcanization accelerating agent (CBS)^{*11} | 1.6 | 1.6 | 1.6 | 1.6 | 1.6 |
| Sulfur | 1.5 | 1.5 | 1.5 | 1.5 | 1.5 |
| Foaming agent^{*12} | - | - | - | - | - |
| Urea | - | - | - | - | - |
| Fine particle-containing organic fiber^{*13} | - | - | - | - | - |
| Whole sipe length (cm/cm²) | 2.7 | 2.7 | 2.7 | 2.7 | 2.7 |
| E' (-20°C) | 18 | 33 | 35 | 42 | 48 |
| On-ice performance | 155 | 156 | 158 | 128 | 116 |
| DRY drivability | 99 | 114 | 114 | 103 | 104 |
| Abrasion resistance | 104 | 125 | 132 | 98 | 99 |
| Surface roughness (Ra 75) | 10 | 11 | 13 | 14 | 18 |

**Table 1-2-2**

| | Example | | | | |
|---|---|---|---|---|---|
| | 15 | 16 | 17 | 18 | 19 |
| Natural rubber | 50 | 50 | 50 | 50 | 50 |
| Cis-1,4-polybutadiene rubber^{*1} | 50 | 50 | 50 | 50 | 50 |
| Modified polybutadiene rubber^{*2} | - | - | - | - | - |
| Brominated butyl rubber | - | - | - | - | - |
| Carbon black^{*3} | - | - | - | - | - |
| Carbon black^{*4} | - | - | - | - | - |
| Carbon black^{*5} | 30 | 30 | 30 | 30 | 30 |
| Silica^{*6} | 30 | 30 | 30 | 30 | 30 |
| Silane coupling agent^{*7} | 3.0 | 3.0 | 3.0 | 3.0 | 3.0 |
| Higilite^{*8} | 30.0 | - | 30.0 | - | 30.0 |
| Spindle oil | 20.0 | 20.0 | 20.0 | 20.0 | 20.0 |
| Stearic acid | 1.0 | 1.0 | 1.0 | 1.0 | 1.0 |
| Antioxidant (TPPD)^{*9} | 1.0 | 1.0 | 1.0 | 1.0 | 1.0 |
| Zinc oxide | 3.0 | 3.0 | 3.0 | 3.0 | 3.0 |
| Vulcanization accelerating agent (MBTS)^{*10} | 0.5 | 0.5 | 0.5 | 0.5 | 0.5 |
| Vulcanization accelerating agent (CBS)^{*11} | 1.6 | 1.6 | 1.6 | 1.6 | 1.6 |
| Sulfur | 1.5 | 1.5 | 1.5 | 1.5 | 1.5 |
| Foaming agent^{*12} | - | - | - | - | - |
| Urea | - | - | - | - | - |
| Fine particle-containing organic fiber^{*13} | - | - | - | - | - |
| Whole sipe length (cm/cm²) | 2.7 | 3.2 | 3.2 | 1.6 | 1.6 |
| E' (-20°C) | 26 | 26 | 26 | 26 | 26 |
| On-ice performance | 178 | 172 | 103 | 121 | 88 |
| DRY drivability | 98 | 100 | 98 | 110 | 109 |
| Abrasion resistance | 96 | 95 | 109 | 125 | 126 |
| Surface roughness (Ra 75) | 27 | 29 | 29 | 27 | 27 |

**Table 1-3**

| | Example 20 | Comparative Example | | | |
|---|---|---|---|---|---|
| | | 2 | 3 | 4 | 5 |
| Natural rubber | 50 | 50 | 50 | 50 | 50 |
| Cis-1,4-polybutadiene rubber^{*1} | - | 50 | 50 | 50 | - |
| Modified polybutadiene rubber^{*2} | 50 | - | - | - | 50 |
| Brominated butyl rubber | - | - | - | - | - |
| Carbon black^{*3} | - | - | - | | - |
| Carbon black^{*4} | 30 | 30 | 30 | 30 | 30 |
| Carbon black^{*5} | - | - | - | | - |
| Silica^{*6} | 30 | 30 | 30 | 30 | 30 |
| Silane coupling agent^{*7} | 3.0 | 3.0 | 3.0 | 3.0 | 3.0 |
| Higilite^{*8} | 40.0 | 0 | 15.0 | 0 | 60.0 |
| Spindle oil | 20.0 | 20.0 | 20.0 | 20.0 | 20.0 |
| Stearic acid | 1.0 | 1.0 | 1.0 | 1.0 | 1.0 |
| Antioxidant (TPPD)^{*9} | 1.0 | 1.0 | 1.0 | 1.0 | 1.0 |
| Zinc oxide | 3.0 | 3.0 | 3.0 | 3.0 | 3.0 |
| Vulcanization accelerating agent (MBTS)^{*10} | 0.5 | 0.5 | 0.5 | 0.5 | 0.5 |
| Vulcanization accelerating agent (CBS)^{*11} | 1.6 | 1.6 | 1.6 | 1.6 | 1.6 |
| Sulfur | 1.5 | 1.5 | 1.5 | 1.5 | 1.5 |
| Foaming agent^{*12} | 2.5 | - | - | - | 2.5 |
| Urea | 2.5 | - | - | - | 2.5 |
| Fine particle-containing organic fiber^{*13} | 2 | - | - | - | 2 |
| Whole sipe length (cm/cm²) | 2.7 | 0.7 | 4.5 | 2.7 | 2.7 |
| E' (-20°C) | 24 | 24 | 24 | 24 | 18 |
| On-ice performance | 160 | 90 | 105 | 90 | 170 |
| DRY drivability | 100 | 105 | 90 | 100 | 99 |
| Abrasion resistance | 90 | 105 | 95 | 100 | 80 |
| Surface roughness (Ra 75) | 60 | 20 | 13 | 8 | 110 |

### INDUSTRIAL APPLICABILITY

The effects of the present invention can be exerted by controlling a tread rubber which is inhibited in a reduction of a DRY performance on a dry road surface and maintained in an abrasion resistance and which has an on-ice performance on an ice road surface and a WET performance on a wet road surface and a roughness of a tread surface after running. The above roughness contributes principally to a constitution of a tire surface to a large extent and provides a large effect of enhancing an on-ice performance on a road surface having low µ particularly in the vicinity of 0°C. Further, capable of being provided is a pneumatic tire for use in a winter season in which marked effects thereof are exerted by combination with patterns provided densely with sipes in order to discharge water through micro water channels.

## Claims

1. A pneumatic tire **characterized by** that a tread surface roughness (Ra 75) after running 3000 km on a paved road which is measured based on JIS B0601 is 10 to 100 µm and that a whole sipe length per 1 cm² of a ground contact area on the above tread surface is 1.0 to 4.0 cm.

2. The pneumatic tire according to claim 1, wherein a rubber component (A) in a tread rubber composition constituting the tread comprises natural rubber and/or synthetic conjugated diene base rubber, and carbon black (B) having a nitrogen adsorption specific surface area (N₂SA) of 120 m²/g or more is contained in an amount of 2 to 90 parts by mass per 100 parts by mass of the above rubber component (A).

3. The pneumatic tire according to claim 1 or 2, wherein among whole fillers contained in the tread rubber composition, silica (C) accounts for a proportion of 30 to 100 % by mass.

4. The pneumatic tire according to claim 3, wherein the silica (C) has a nitrogen adsorption specific surface area (N₂SA) of 120 to 220 m²/g and CTAB of 130 to 170 m²/g.

5. The pneumatic tire according to any of claims 1 to 4, wherein an inorganic filler (D) other than the silica (C) and/or a non-reinforcing organic filler (E) are contained in an amount of 3 to 50 parts by mass per 100 parts by mass of the rubber component (A).

6. The pneumatic tire according to claim 5, wherein the inorganic filler (D) or the non-reinforcing organic filler (E) in the rubber composition has an average particle diameter of 0.1 to 100 µm.

7. The pneumatic tire according to claim 5 or 6, wherein the inorganic filler (D) is represented by the following Formula (I) :
M•xSiO₂•yH₂O (I)
(wherein M is oxide or hydroxide of at least one metal selected from Al, Mg, Ti and Ca, and both of x and y are an integer of 0 to 10) and has an average particle diameter of 100 µm or less.

8. The pneumatic tire according to any of claims 2 to 7, wherein at least one of the synthetic conjugated diene base rubbers constituting the rubber component (A) is a polybutadiene rubber (F) having a cis-1,4 bond content of 90 % or more.

9. The pneumatic tire according to claim 8, wherein a proportion of the component (F) based on the rubber component (A) is 10 to 90 % by mass.

10. The pneumatic tire according to any of claims 2 to 9, wherein at least one of the synthetic conjugated diene base rubbers constituting the rubber component (A) is an end-modified conjugated diene base rubber (G) produced by a method comprising a step for reacting the active end of a conjugated diene base polymer having an active end which is obtained by polymerizing a conjugated diene base monomer comprising principally 1,3-butadiene and in which a content of a cis-1,4-bond in a conjugated diene part of a principal chain is 75 mole % or more with a hydrocarbyloxysilane compound I represented by the following Formula (II) and/or a partial condensation product thereof: 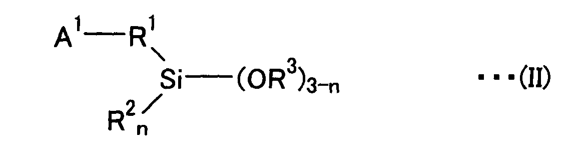 (wherein A¹ is a monovalent group having at least one functional group selected from an epoxy group, a thioepoxy group, an isocyanate group, a thioisocyanate group, a ketone group, a thioketone group, an aldehyde group, a thioaldehyde group, an imino group, an amide group, a trihydrocarbyl isocyanurate residue, a carboxylic acid ester residue, a thiocarboxylic acid ester residue, a carboxylic anhydride residue, a carboxylic halide residue and a dihydrocarbyl carbonate residue; R¹ is a single bond or a divalent inactive hydrocarbon group; R² and R³ each represent independently a monovalent aliphatic hydrocarbon group having 1 to 20 carbon atoms or a monovalent aromatic hydrocarbon group having 6 to 18 carbon atoms; n is an integer of 0 to 2; when a plurality of OR³ is present, a plurality of OR³ may be the same or different; and an active proton and an onium salt are not contained in a molecule).

11. The pneumatic tire according to claim 10, wherein the end-modified conjugated diene base rubber (G) is produced by a method comprising a secondary modification step (a) in which a condensation accelerating agent is added to carry out condensation reaction of an introduced hydrocarbyloxysilane compound residue with the unreacted hydrocarbyloxysilane compound after primary modification for reacting the hydrocarbyloxysilane compound I.

12. The pneumatic tire according to claim 11, wherein the end-modified conjugated diene base rubber (G) is produced by a method comprising a step (b) for carrying out secondary modification in which the hydrocarbyloxysilane compound is further added and reacted under the presence of the condensation accelerating agent after primary modification for reacting the hydrocarbyloxysilane compound I and/or the partial condensation product thereof.

13. The pneumatic tire according to claim 12, wherein the end-modified conjugated diene base rubber (G) is produced by using at least one selected from the hydrocarbyloxysilane compound I represented by Formula (II) and/or the partial condensation product thereof, a hydrocarbyloxysilane compound II represented by the following Formula (III) and/or a partial condensation product thereof and a hydrocarbyloxysilane compound III represented by the following Formula (IV) and/or a partial condensation product thereof as the hydrocarbyloxysilane compound used for the secondary modification step (b) described above: 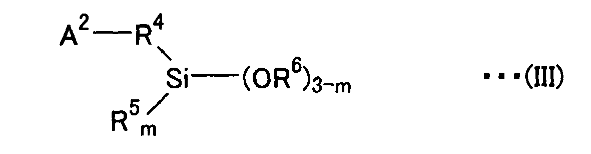 (wherein A² represents a monovalent group having at least one functional group selected from a cyclic tertiary amino group, a non-cyclic tertiary amino group, a pyridine residue, a sulfide group, a multisulfide group, a nitrile group, an onium salt residue of cyclic tertiary amine, an onium salt residue of non-cyclic tertiary amine, a group having an allyl or benzyl Sn bond, a sulfonyl group, a sulfinyl group and a nitrile group; R⁴ represents a single bond or a divalent inactive hydrocarbon group; R⁵ and R⁶ each represent independently a monovalent aliphatic hydrocarbon group having 1 to 20 carbon atoms or a monovalent aromatic hydrocarbon group having 6 to 18 carbon atoms; m is an integer of 0 to 2; and when a plurality of OR⁶ is present, a plurality of OR⁶ may be the same or different); 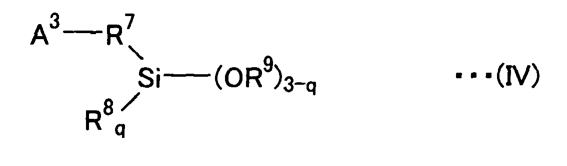 (wherein A³ represents a monovalent group having at least one functional group selected from a hydroxy group, a thiol group, a primary amino group, an onium salt residue of primary amine, a cyclic secondary amino group, an onium salt residue of cyclic secondary amine, a non-cyclic secondary amino group and an onium salt residue of non-cyclic secondary amine; R⁷ represents a single bond or a divalent inactive hydrocarbon group; R⁸ and R⁹ each represent independently a monovalent aliphatic hydrocarbon group having 1 to 20 carbon atoms or a monovalent aromatic hydrocarbon group having 6 to 18 carbon atoms; q is an integer of 0 to 2; and when a plurality of OR⁹ is present, a plurality of OR⁹ may be the same or different).

14. The pneumatic tire according to any of claims 10 to 13, wherein the end-modified conjugated diene base rubber (G) is produced by using both of at least one selected from the group consisting of metal compounds represented by (1) to (3) described below and water as the condensation accelerating agent described above:
(1) a salt of carboxylic acid having 3 to 30 carbon atoms with tin having an oxidation number of 2:
Sn(OCOR¹⁰)₂
(wherein R¹⁰ is an organic group having 2 to 29 carbon atoms, and when a plurality thereof is present, they may be the same or different),
(2) a compound of tin having an oxidation number of 4 which satisfies the following formula:
R¹¹ᵣSnA⁴ₜB¹₍₄₋ₜ₋ᵣ₎
(wherein r is an integer of 1 to 3, and t is an integer of 1 or 2; t + r is an integer of 3 or 4; R¹¹ is an aliphatic hydrocarbon group having 1 to 30 carbon atoms; B¹ is a hydroxyl group or halogen; A⁴ is a group selected from (a) a carboxyl group having 2 to 30 carbon atoms, (b) a 1,3-dicarbonyl-containing group having 5 to 30 carbon atoms, (c) a hydrocarbyloxy group having 3 to 30 carbon atoms and (d) a siloxy group which is totally tri-substituted (may be the same or different) with a hydrocarbyl group having 1 to 20 carbon atoms and/or a hydrocarbyloxy group having 1 to 20 carbon atoms, and when a plurality of A⁴ is present, they may be the same or different) and
(3) a titanium compound having an oxidation number of 4 which satisfies the following formula:
A^{s}ₓTiB²₍₄₋ₓ₎
(wherein x is an integer of 2 or 4; A⁵ is (e) a hydrocarbyloxy group having 3 to 30 carbon atoms or (f) a siloxy group which is totally tri-substituted with an alkyl group having 1 to 30 carbon atoms and/or a hydrocarbyloxy group having 1 to 20 carbon atoms, and when a plurality of A⁵ is present, they may be the same or different; and B² is a 1,3-dicarbonyl-containing group having 5 to 30 carbon atoms).

15. The pneumatic tire according to any of claims 10 to 14, wherein the conjugated diene base rubber (G) having an active end described above is produced by polymerizing a conjugated diene base monomer comprising principally 1,3-butadiene using a polymerization catalyst prepared by combining at least one compound selected from the respective components of (i), (ii) and (iii) described below:
a component (i); a compound containing a rare earth element corresponding to an atomic number of 57 to 71 in the periodic table or a reaction product of the above compound with a Lewis base,
a component (ii); alumoxane and/or an organic aluminum compound corresponding to A1R12R13R¹⁴ (wherein R¹² and R¹³ are the same or different and are a hydrocarbon group having 1 to 10 carbon atoms or a hydrogen atom, and R¹⁴ is a hydrocarbon group having 1 to 10 carbon atoms, provided that R¹⁴ may be the same as or different from R¹² or R¹³) and
a component (iii); at least one halogen compound selected from the group consisting of a Lewis acid, a complex compound of metal halide and a Lewis base and an organic compound containing active halogen.

16. The pneumatic tire according to any of claims 10 to 15, wherein the conjugated diene base rubber (G) having an active end is an end-modified polybutadiene rubber having a cis-1,4 bond content of 90 % or more.

17. The pneumatic tire according to claim 16, wherein a proportion of the component (G) based on the rubber component (A) is 10 to 90 % by mass.

18. The pneumatic tire according to any of claims 2 to 17, wherein at least one of the synthetic conjugated diene base rubbers constituting the rubber component (A) is a halogenated butyl rubber (H).

19. The pneumatic tire according to claim 18, wherein a proportion of the component (H) based on the rubber component (A) is 10 to 90 % by mass.

20. The pneumatic tire according to any of claims 1 to 19, wherein a storage elastic modulus (E') of the tread rubber composition at -20°C is 5 to 40 MPa.

21. The pneumatic tire according to any of claims 1 to 20, wherein a foamed rubber is used on a surface of the tread part brought into substantial contact with a road surface.
